# FASCICULE DE BREVET EUROPEEN

(11) **EP 1 299 453 B1**
(45) Date de publication et mention de la délivrance du brevet: **30.08.2006**
(21) Numéro de dépôt: 01945439.6
(22) Date de dépôt: 14.06.2001
(51) Int. Cl.: C08G 77/26, C08G 77/388

(54) **NOUVEAUX COMPOSES ORGANOSILICIQUES COMPRENANT UN POLYORGANOSILOXANE MULTIFONCTIONNEL PORTEUR D'AU MOINS UNE DOUBLE LIAISON ETHYLENIQUE ACTIVEE DE TYPE IMIDE ET LEURS PROCEDES DE PREPARATION**
ORGANOSILICIUMVERBINDUNGEN DIE POLYORGANOSILOXANE MIT ETHYLENISCH UNGESÄTTIGTEN DURCH IMIDGRUPPEN AKTIVIERTE GRUPPEN ENTHALTEN UND VERFAHREN ZUR DEREN HERSTELLUNG
NOVEL ORGANOSILICON COMPOUNDS COMPRISING A MULTIFUNCTIONAL POLYORGANOSILOXANE BEARING AT LEAST AN ACTIVATED IMIDE-TYPE DOUBLE ETHYLENE BOND AND METHODS FOR PREPARING SAME

(30) Priorité: 16.06.2000 FR 0007699
(43) Date de publication de la demande: 09.04.2003
(73) Titulaire: RHODIA CHIMIE, 92512 Boulogne Billancourt Cedex (FR)
(72) Inventeur: GUENNOUNI, Nathalie, F-69540 Irigny (FR); LEBRUN, Jean-Jacques, F-69310 Pierre Bénite (FR)
(74) Mandataire: Delenne, Marc
(86) Numéro de dépôt international: PCT/FR2001/001858
(87) Numéro de publication internationale: WO 2001/096445

(56) Documents cités:
- DE-A- 2 020 843
- FR-A- 2 308 126
- FR-A- 2 514 013
- US-A- 3 576 031
- US-A- 4 075 167
- US-A- 4 565 873
- PINTEALA M ET AL: "FUNCTIONAL POLYSILOXANES 2. ON THE REACTION OF HYDROXYPROPYL- AND AMINOALKYL-TERMINATED POLYDIMETHYLSILOXANES WITH CYCLIC ANYDRIDES" POLYMER BULLETIN,DE,SPRINGER VERLAG. HEIDELBERG, vol. 32, no. 2, 1 février 1994 (1994-02-01), pages 173-178, XP000425948 ISSN: 0170-0839

## Description

Le domaine de la présente invention est celui des procédés de fonctionnalisation permettant de conduire à des composés organosiliciques comprenant des polyorganosiloxanes (en abrégé POS) multifonctionnels comportant, par molécule, et attachés à des atomes de silicium, d'une part au moins un radical hydroxyle et/ou au moins un radical alkoxyle et d'autre part au moins un groupe contenant une double liaison éthylénique activée consistant dans un groupe maléimide.

Les composés comprenant des POS multifonctionnels tel que ceux visés ci-dessus, sont aptes à présenter des propriétés intéressantes, par exemple, comme agent de couplage (charge blanche-élastomère) dans les compositions de caoutchouc à base d'élastomère(s) isoprénique(s) comprenant une charge blanche à titre de charge renforçante.

Le principe de la multifonctionnalisation de POS est décrit, par exemple, dans le document WO-A-96/16125 au nom de la Demanderesse qui divulgue la préparation de POS multifonctionnels porteurs de motifs fonctionnels ≡Si-O-alkyle et de motifs fonctionnels ≡Si-W où W est notamment un groupe hydrocarboné en C₂ - C₃₀, un groupe alkényle simple, un groupe cycloaliphatique insaturé ou un groupe mercaptoalkyle.

Poursuivant des travaux dans le domaine de la multifonctionnalisation, la Demanderesse a maintenant trouvé, et c'est ce qui constitue l'objet de l'invention, de nouveaux procédés grâce auxquels des composés organosiliciques comprenant des POS multifonctionnels porteurs, outre d'au moins un radical alkoxyle et/ou hydroxyle, d'au moins un groupe maléimide, peuvent être préparés.

Le groupe maléimide s'avère être une fonction intéressante dans les processus chimiques au sein desquels interviennent notamment des réactions vis-à-vis d'espèces actives telles que par exemple un radical hydrocarboné C•, un radical mercaptoalkyle RS•, un anion mercaptoalkyle RS⁻, et des réactions de cycloaddition (ènes" réactions).

La revue de l'art antérieur fait apparaître que les méthodes de synthèse permettant d'accéder aux fonctions maléimides sont variées. Cependant, la Demanderesse a constaté que les méthodes de synthèse habituellement proposées, quand on les applique à la chimie des silicones, peuvent ne pas offrir des rendements de fonctionnalisation satisfaisants dans le cas, qui est fréquent, où les conditions opératoires utilisées viennent modifier de façon importante le squelette silicone et minimiser d'autant, par voie de conséquence, la sélectivité de la méthode de synthèse ; on trouve ces inconvénients pour les procédés décrits, notamment, dans les documents FR-A-2 295 959, FR-A-2 308 126 et US-A-3 576 031 où l'on prépare des polyorganosiloxanes imido-substitués, pouvant comprendre en outre dans leur structure au moins une fonction alkoxyle et/ou hydroxyle, soit en faisant réagir l'anhydride maléique (ou un dérivé) avec un aminopolysiloxane éventuellement équipé de fonction(s) alkoxyle et/ou hydroxyle, soit (dans le cas du brevet US) en faisant réagir un organosilane imido-substitué avec un polyorganosiloxane α,ω-hydroxylé. L'objet de la présente invention est donc de fournir des procédés de préparation de composés comprenant des POS multifonctionnels porteurs de fonction(s) maléimide(s) qui sont aisés à mettre en oeuvre et procurant l'avantage indéniable de pouvoir conduire à des POS fonctionnalisés avec des sélectivités, des stabilités et des rendements se situant à un niveau d'excellence non encore atteint jusqu'ici.

Pour être plus précis, sont compris dans la portée de l'invention les composés organosiliciques qui comprennent des POS multifonctionnels qui sont essentiellement linéaires et possèdent la formule moyenne suivante : 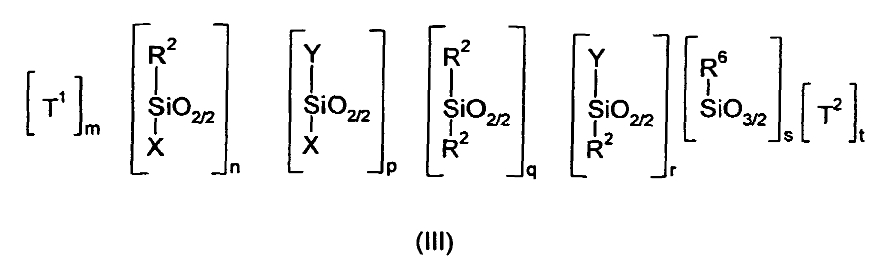 dans laquelle :
(1') les symboles T¹ sont choisis parmi les motifs HO_{1/2} et R¹O_{1/2}, où le radical R¹ représente un radical alkyle, linéaire ou ramifié, ayant de 1 à 15 atomes de carbone ; de manière préférée, le radical R¹O est choisi parmi un radical alkoxyle, linéaire ou ramifié, ayant de 1 à 6 atomes de carbone ; de manière plus préférée, le radical R¹O est choisi parmi un un radical alkoxyle, linéaire ou ramifié ayant de 1 à 3 atomes de carbone (c'est-à-dire méthoxyle, éthoxyle, propoxyle et/ou isopropoxyle) ;
(2') les symboles T², identiques ou différents des symboles T¹, sont choisis parmi les motifs HO_{1/2}, R¹O_{1/2} et le motif (R²)₃SiO_{1/2}, où le radical R¹ est tel que défini ci-avant au point (1') et où les radicaux R², identiques ou différents, représentent chacun un groupe hydrocarboné monovalent choisi parmi un radical alkyle, linéaire ou ramifié, ayant de 1 à 6 atomes de carbones, un radical cycloalkyle ayant de 5 à 8 atomes de carbone, et un radical phényle ; de manière préférée, les symboles R² sont choisis parmi les radicaux : méthyle, éthyle, n-propyle, isopropyle, n-butyle, n-pentyle, cyclohexyle et phényle ; de manière plus préférée, les symboles R² sont des radicaux méthyles ;
(3') les symboles R², X et Y sont tels que définis ci-après :
   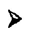 les symboles R2 sont tels que définis ci-avant au point (2') ;
   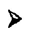 les symboles X, identiques ou différents, représentent chacun une fonction portant une double liaison éthylénique activée, choisie parmi les radicaux ayant les formules (II/1), (II/2), (II/3) suivantes, et leurs mélanges : 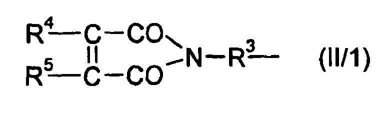 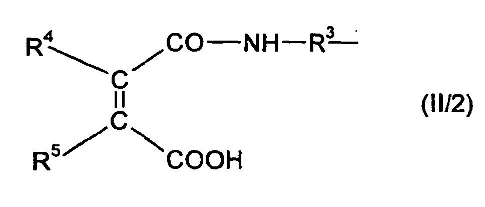 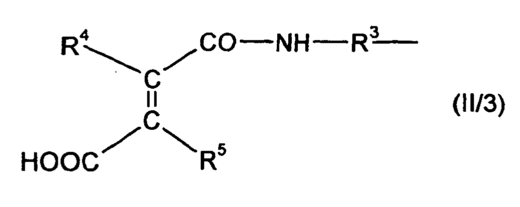
      - avec les conditions selon lesquelles:
         - au moins une des fonctions X répond à la formule (II/1),
         - quand, le cas échéant, on a un mélange de fonction(s) X de formule (II/1) avec des fonctions X de formules (II/2) et/ou (II/3), la fraction molaire de fonctions X de formules (II/2) et/ou (II/3) dans l'ensemble des fonctions X est en moyenne égale ou inférieure à 12 % en mole et, de préférence, à 5 % en mole,
      - formules dans lesquelles :
         + R³ est un radical divalent alkylène, linéaire ou ramifié, comprenant de 1 à 15 atomes de carbone dont la valence libre est portée par un atome de carbone et est reliée à un atome de silicium, ledit radical R³ pouvant être interrompu au sein de la chaîne alkylène par au moins un hétéroatome (comme l'oxygène et l'azote) ou au moins un groupement divalent comprenant au moins un hétéroatome. (comme l'oxygène et l'azote), et en particulier par au moins un reste divalent de formule générale ^{V1}reste^{V2} choisi parmi : -O-, -CO-, -CO-O-, -COO-cyclohexylène (éventuellement substitué par un radical OH)-, -O-alkylène (linéaire ou ramifié en C₂-C₆, éventuellement substitué par un radical OH ou COOH)-, -O-CO-alkylène (linéaire ou ramifié en C₂-C₆, éventuellement substitué par un radical OH ou COOH)-, -CO-NH-, -O-CO-NH-, et -NH-alkylène (linéaire ou ramifié en C₂-C₆)-CO-NH- ; R³ représente encore un radical aromatique divalent de formule générale ^{V1}radical^{V2} choisi parmi : -phénylène(ortho, méta ou para)-alkylène (linéaire ou ramifié en C₂-C₆)-, -phénylène(ortho, méta ou para) -O-alkylène (linéaire ou ramifié en C₂-C₆)-, -alkylène(linéaire ou ramifié en C₂ -C₆)- phénylène(ortho, méta ou para)-alkylène (linéaire ou ramifié en C₁-C₆-, et -alkylène (linéaire ou ramifié en C₂-C₆)-phénylène (ortho, méta ou para)-O-alkylène (linéaire ou ramifié en C₁-C₆)- ; de manière préférée, le symbole R³ représente un radical alkylène qui répond aux formules suivantes : -(CH₂)₂-, -(CH₂)₃-, -(CH₂)₄-, -CH₂-CH(CH₃)-, -(CH₂)₂-CH(CH₃)-CH₂-, -(CH₂)₃-O-(CH₂)₃-, -(CH₂)₃-O-CH₂-CH(CH₃)-CH₂-, -(CH₂)₃-O-CH₂CH(OH)-CH₂- ; de manière plus préférée, R³ est un radical -(CH₂)₂- ou -(CH₂)₃- ; avec la précision selon laquelle, dans les définitions de R³ qui précèdent, les restes et radicaux divalents mentionnnés quand ils ne sont pas symétriques, peuvent être positionnés avec la valence v1 à gauche et à la valence v2 à droite ou inversement avec la valence v2 à gauche et la valence v1 à droite ;
         + les symboles R⁴ et R⁵, identiques ou différents, représentent chacun un atome d'hydrogène, un atome d'halogène, un radical cyano ou un radical alkyle, linéaire ou ramifié, ayant de 1 à 6 atomes de carbone ; de manière préférée, les symboles R⁴ et R⁵ sont choisis parmi un atome d'hydrogène, un atome de chlore, et les radicaux méthyle, éthyle, n-propyle, n-butyle ; de manière plus préférée, ces symboles sont choisis parmi un atome d'hydrogène et un radical méthyle ;
   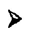 les symboles Y, identiques ou différents, représentent chacun une fonction hydroxyle ou alkoxyle R¹O où R¹ est tel que défini ci-avant au point (1') ;
(4') les symboles R⁶ sont choisis parmi les radicaux répondant aux définitions de R², X et Y;
(5') les symboles m, n, p, q, r, s et t représentent chacun des nombres entiers ou fractionnaires qui répondent aux conditions cumulatives suivantes :
   ■ m et t sont l'un et l'autre des nombres toujours différents de zéro dont la somme est égale à 2 + s,
   ■ n se situe dans l'intervalle allant de 0 à 50,
   ■ p se situe dans l'intervalle allant de 0 à 20,
   ■ quand n = 0, p est au moins égal à 1 et quand p = 0, n est au moins égal à 1,
   ■ q se situe dans l'intervalle allant de 0 à 48,
   ■ r se situe dans l'intervalle allant de 0 à 10,
   ■ s se situe dans l'intervalle allant de 0 à 1,
   ■ la somme n + p + q + r + s + t donnant le nombre total d'atomes de silicium se situe dans l'intervalle allant de 2 à 50,
   ■ le rapport 100s/(n + p + q + r + s + t) donnant le taux de motifs "T" est ≤ à 10,
   ■ le rapport 100 (m + p + r + s [quand R⁶ = Y] + t) / (n + p + q + r + s + t) donnant le taux de fonctions Y (apportée par les motifs représentés par les symboles T¹, T² et Y) va de 4 à 100,
   ■ le rapport 100 (n + p + s [quand R⁶ = X]) / (n + p + q + r + s + t) donnant le taux de fonctions X va de 10 à 100.

Dans ce qui précède : les motifs "T" sont les motifs R⁶SiO_{3/2} où R⁶ est choisi parmi les radicaux répondant aux définitions de R², Y et X, le taux des motifs "T" étant exprimé par le nombre, par molécule, de ces motifs pour 100 atomes de silicium ; le taux de fonctions Y est exprimé par le nombre, par molécule, de fonctions Y pour 100 atomes de silicium ; le taux de fonctions X est exprimé par le nombre, par molécule, de fonctions X pour 100 atomes de silicium.

### OBJET DE L'INVENTION

L'objet de la présente invention concerne donc les procédés grâce auxquels les composés organosiliciques comprenant les POS multifonctionnels de formule (III), peuvent être préparés.

Un premier mode opératoire avantageux est un procédé (d) qui permet de préparer des composés organosiliciques comprenant les POS multifonctionnels dans la formule (III) desquels le symbole q est égal à zéro, ledit procédé étant caractérisé en ce qu'il consiste à réaliser les étapes (d1) et (d2) suivantes :
(d1) on fait réagir :
   - un organosilane de formule: 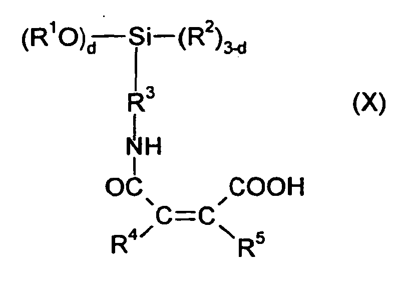
   - avec un disilazane de formule:

      (R²)₃Si―NH―Si(R²)₃ (XI)

      formules dans lesquelles les symboles R¹, R², R³, R⁴ et R⁵ sont des radicaux répondant aux définitions données aux points (1') à (3') concernant la formule (III), et d est un nombre choisi parmi 2 ou 3,
   - cette réaction étant effectuée en présence d'un catalyseur, supporté ou non sur une matière minérale (comme par exemple une matière siliceuse), à base d'au moins un acide de Lewis, en opérant à la pression atmosphérique et à une température se situant dans l'intervalle allant de la température ambiante (23°C) à 150°C, et, de préférence, allant de 60°C à 120°C ;
(d2) on procède à la stabilisation du milieu réactionnel obtenu par traitement de ce dernier avec au moins un halogénosilane de formule (R²)₃ Si-halogéno où le reste halogéno est choisi de préférence parmi un atome de chlore ou brome, en opérant en présence d'au moins une base organique non nucléophile et non réactive vis-à-vis de la fonction imide formée in situ au cours de l'étape (d1).

Le disilazane est utilisé en quantité au moins égale à 0,5 mole pour 1 mole d'organosilane de départ et, de préférence, allant de 1 à 5 moles pour 1 mole d'organosilane.

L'acide de Lewis préféré est le ZnCl₂ et/ou ZnBr₂ et/ou le Znl₂. II est utilisé en quantité au moins égale à 0,5 mole pour 1 mole d'organosilane et, de préférence, allant de 1 à 2 moles pour 1 mole d'organosilane.

La réaction est conduite en milieu hétérogène, de préférence en présence d'un solvant ou d'un mélange de solvants commun(s) aux réactifs organosiliciques. Les solvants préférés sont du type polaire aprotique comme par exemple le chlorobenzène, le toluène, le xylène, l'hexane, l'octane, le décane. Les solvants plus préférentiellement retenus sont le toluène et le xylène.

Ce procédé (d) peut être mis en oeuvre en suivant tout mode opératoire connu en soi. Un mode opératoire qui convient bien est le suivant : dans un premier temps, le réacteur est alimenté avec l'acide de Lewis, puis on coule progressivement une solution de l'organosilane dans tout ou partie du (ou des) solvant(s) ; dans un second temps, on porte le mélange réactionnel à la température choisie, puis on coule le disilazane qui peut éventuellement être engagé sous forme de solution dans une partie du (ou des) solvant(s) ; puis dans un troisième temps, le mélange réactionnel obtenu est traité avec au moins un halogénosilane en présence d'une ou plusieurs base(s) organique(s) en vue de sa stabilisation ; et finalement dans un quatrième temps, le milieu réactionnel stabilisé est filtré pour éliminer l'acide de Lewis et le sel formé in situ lors de la stabilisation, puis il est soumis à une dévolatilisation sous pression réduite pour éliminer le (ou les) solvant(s).

A propos de l'étape (d2) de stabilisation, le (ou les) halogénosilane(s) est (sont) utilisé(s) en quantité au moins égale à 0,5 mole pour 1 mole d'organosilane de départ et, de préférence, allant de 0,5 à 1,5 moles pour 1 mole d'organosilane. S'agissant des bases organiques, celles qui sont préférées sont en particulier des amines aliphatiques tertiaires (comme par exemple la N-méthylmorpholine, la triéthylamine, la triisopropylamine) et des amines cycliques encombrées (comme par exemple les tétraalkyl-2,2,6,6 pipéridines). La (les) base(s) organique(s) est (sont) utilisée(s) en quantité au moins égale à 0,5 mole pour 1 mole d'organosilane de départ et, de préférence, allant de 0,5 à 1,5 moles pour 1 mole d'organosilane.

Un second mode opératoire avantageux correspond à un procédé (e) qui permet de préparer des composés organosiliciques comprenant les POS multifonctionnels dans la formule (III) desquels le symbole q est différent de zéro et au plus égal à 48, ledit procédé étant caractérisé en ce qu'il consiste à réaliser la seule étape (d1) définie comme indiqué ci-avant, mais dans laquelle le disilazane de formule (XI) a été remplacé par un polysilazane cyclique de formule : 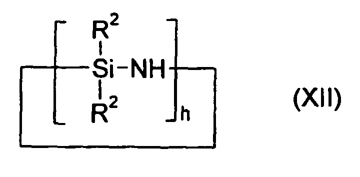 dans laquelle les symboles R² sont tels que définis ci-avant et h est un nombre allant de 3 à 8.

Ce procédé (e) peut être mis en oeuvre en utilisant le mode opératoire présenté ci-avant à propos de la mise en oeuvre du procédé (d), et reposant sur la réalisation des seuls premiers temps, second temps et quatrième temps dont on a parlé ci-avant. A noter cependant que le polysilazane est utilisé en quantité au moins égale à 0,5/h mole pour 1 mole d'organosilane de départ et, de préférence, allant de 1/h à 5/h moles pour 1 mole d'organosilane (h étant le nombre de motifs silazane dans le polysilazane de formule (XII)).

II a été écrit ci-avant que l'invention s'intéresse à des composés organosiliciques "qui comprennent des POS multifonctionnels" ; cette expression doit être interprétée comme signifiant que chaque composé organosilicique faisant partie de la présente invention peut se présenter sous forme d'un POS multifonctionnel à l'état pur ou sous forme d'un mélange de pareil POS avec une quantité pondérale variable (généralement bien inférieure à 50 % dans le mélange) d'un autre (ou d'autres) composé(s) qui peut (peuvent) consister dans :
(i) l'un et/ou l'autre des réactifs de départ à partir desquels sont préparés les POS multifonctionnels, lorsque le taux de transformation desdits réactifs n'est pas complet ; et/ou
(ii) le (ou les) produit(s) issus(s) d'une modification complète ou incomplète du squelette silicone du (ou des) réactif(s) de départ ; et/ou
(iii) le (ou les) produit(s) issu(s) d'une modification du squelette silicone du POS multifonctionnel souhaité, réalisée par une réaction de condensation, une réaction d'hydrolyse et de condensation et/ou une réaction de redistribution.

Plus précisément, la réalisation des procédés (d) et (e) conduit à l'obtention d'un composé organosilicique qui peut se présenter sous la forme d'un POS multifonctionnel à l'état pur ou sous la forme d'un mélange d'un POS multifonctionnel avec une quantité pondérale variable (généralement bien inférieure à 50 % dans le mélange) d'un autre (ou d'autres) composé(s) qui peut (peuvent) consister par exemple dans :
(i) une petite quantité de l'organosilane de départ de formule (X) n'ayant pas réagi ; et/ou
(ii) une petite quantité de l'organosilane de formule : 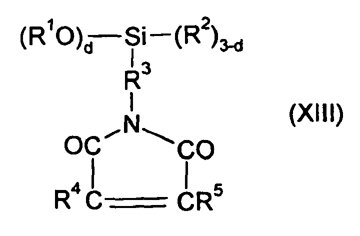 formé par cyclisation directe de la quantité correspondante de l'organosilane de départ de formule (X) ; et/ou
(iii) une petite quantité du POS monofonctionnel cyclique de formule: 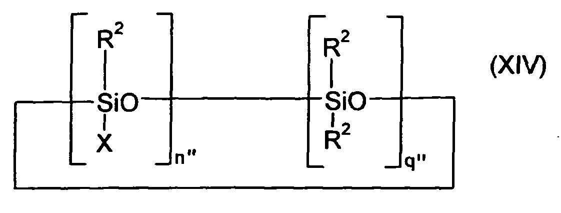 dans laquelle :
   + les symboles R² sont tels que définis ci-avant au points (2') concernant la formule (III),
   + les symboles X sont tels que définis ci-avant aux points (3') concernant la formule (III),
      + les symboles n" et q" sont des nombres entiers ou fractionnaires répondant aux conditions cumulatives suivantes :
         - n" se situe dans l'intervalle allant de 1 à 9,
         - q" se situe dans l'intervalle allant de 1 à 9,
         - la somme n" + q" se situe dans l'intervalle allant de 3 à 10,
ledit POS monofonctionnel cyclique étant issu d'une modification du squelette silicone du POS multifonctionnel souhaité.

Comme composés organosiliciques qui sont préférentiellement visés, on peut citer ceux comprenant les POS multifonctionnels (oligomères et polymères) qui répondent à la formule (III) dans laquelle :
(1") les symboles T¹ sont définis comme indiqué ci-avant au point (1') ;
(2") les symboles T², sont définis comme indiqué ci-avant au point (2') ;
(3") les symboles R², X et Y sont définis comme indiqué ci-avant aux points (3') ;
(4") les symboles R⁶ sont définis comme indiqué ci-avant au point (4') ;
(5") les symboles m, n, p, q, r, s et t sont définis comme indiqué ci-avant au point (5'), mais avec un taux de fonctions Y allant de 10 à 100 et un taux de fonctions X allant de 20 à 100.

### APPLICATION

Les composés organosiliciques selon l'invention, comprenant les POS multifonctionnels conformes à la formule (III) donnée ci-avant, peuvent être utilisés avantageusement comme agent de couplage charge blanche-élastomère dans les compositions d'élastomère(s) de type caoutchouc, naturel(s) ou synthétique(s) à base d'élastomère(s) isoprénique(s), comprenant une charge blanche, notamment une matière siliceuse, à titre de charge renforçante, compositions qui sont destinées à la fabrication d'articles ou élastomère(s).

Les types d'articles en élastomère(s), où l'emploi d'un agent de couplage est le plus utile, sont ceux sujets notamment aux contraintes suivantes : des variations de températures et/ou des variations de sollicitation de fréquence importante en régime dynamique ; et/ou une contrainte statique importante ; et/ou une fatigue en flexion importante en régime dynamique. Des types d'articles sont par exemple : des bandes de convoyeur, des courroies de transmission de puissance, des tuyaux flexibles, des joints de dilatation, des joints d'appareils électroménagers, des supports jouant le rôle d'extracteurs de vibrations de moteurs soit avec des armatures métalliques, soit avec un fluide hydraulique à l'intérieur de l'élastomère, des câbles, des gaines de câbles, des semelles de chaussures et des galets pour téléphériques.

Il est connu de l'homme de l'art qu'il est nécessaire d'utiliser un agent de couplage, encore appelé agent de liaison, qui a pour fonction d'assurer la connexion entre la surface des particules de charge blanche et l'élastomère, tout en facilitant la dispersion de cette charge blanche au sein de la matrice élastomérique.

La Demanderesse a découvert lors de ses recherches que :
- des agents de couplage spécifiques consistant dans un composé comprenant un POS multifonctionnel conforme à la formule (III), porteur d'une part d'au moins un radical OH et/ou d'au moins un radical alkoxyle et d'autre part d'au moins un groupe contenant une double liaison éthylénique activée de type maléimide,
- offrent des performances de couplage au moins équivalentes à celles liées à l'utilisation des alkoxysilanes polysulfurés, notamment le TESPT ou tétrasulfure de bis 3-triéthoxysilylpropyle qui est généralement considéré aujourd'hui comme le produit apportant, pour des vulcanisats chargés à la silice, le meilleur compromis en terme de sécurité au grillage, de facilité de mise en oeuvre et de pouvoir renforçant, mais dont l'inconvénient connu est d'être fort onéreux (voir par exemple brevets US-A-5 652 310, US-A-5 684 171, US-A-5 684 172),
- lorsque lesdits agents de couplage spécifiques sont utilisés dans des compositions de caoutchouc à base d'élastomère(s) isoprénique(s).

Les compositions d'élastomère(s) comprennent :
- au moins un élastomère isoprénique,
- une charge blanche renforçante, et
- une quantité adéquate d'agent de couplage consistant dans le composé organosilicique comprenant le POS multifonctionnnel qui a été défini ci-avant, porteur d'une part d'au moins un radical hydroxyle et/ou d'au moins un radical alkoxyle et d'autre part d'au moins une double liaison éthylénique activée de type maléimide.

Plus précisément, ces compositions comprennent (les parties sont données en poids) :
■ pour 100 parties d'élastomère(s) isoprénique(s),
■ de 10 à 150 parties de charge blanche, de préférence de 30 à 100 parties et plus préférentiellement de 30 à 80 parties,
■ une quantité d'agent de couplage ou de composé organosilicique qui apporte dans la composition de 0,5 à 15 parties de POS multifonctionnel, de préférence de 0,8 à 10 parties et plus préférentiellement de 1 à 8 parties.

De manière avantageuse, la quantité d'agent de couplage, choisie dans les zones générale et préférentielles précitées, est déterminée de manière à ce qu'elle représente de 1 % à 20 %, de préférence de 2 à 15 %, plus préférentiellement de 3 à 8 %, par rapport au poids de la charge blanche renforçante.

Nous allons revenir dans ce qui suit sur les définitions, tour à tour, des élastomères isopréniques, et de la charge blanche renforçante.

Par élastomères isopréniques qui sont mis en oeuvre pour les compositions de caoutchouc, on entend plus précisément :
(1) les polyisoprènes de synthèse obtenus par homopolymérisation de l'isoprène ou méthyl-2 butadiène-1,3 ;
(2) les polyisoprènes de synthèse obtenus par copolymérisation de l'isoprène avec un ou plusieurs monomères insaturés éthyléniquement choisis parmi :
   - (2.1) les monomères diènes conjuguées, autres que l'isoprène, ayant de 4 à 22 atomes de carbone, comme par exemple :le butadiène-1,3, le diméthyl-2,3 butadiène-1,3, le chloro-2 butadiène-1,3 (ou chloroprène), le phényl-1 butadiène-1,3, le pentadiène-1,3, l'hexadiène-2,4 ;
   - (2.2) les monomères vinyles aromatiques ayant de 8 à 20 atomes de carbone, comme par exemple : le styrène, l'ortho-, méta- ou paraméthylstyrène, le mélange commercial "vinyl-toluène", le paratertiobutylstyrène, les méthoxystyrènes, les chlorostyrènes, le vinylmésitylène, le divinylbenzène, le vinylnaphtalène ;
   - (2.3) les monomères nitriles vinyliques ayant de 3 à 12 atomes de carbone, comme par exemple l'acrylonitrile, le méthacrylonitrile ;
   - (2.4) les monomères esters acryliques dérivés de l'acide acrylique ou de l'acide méthacrylique avec des alcanols ayant de 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle ;
   - (2.5) un mélange de plusieurs des monomères précités (2.1) à (2.4) entre eux ; les polyisoprènes copolymères contenant entre 99 % et 20 % en poids d'unités isopréniques et entre 1 % et 80 % en poids d'unités diéniques, vinyles aromatiques, nitriles vinyliques et/ou esters acryliques, et consistant par exemple dans le poly(isoprène-butadiène), le poly(isoprène-styrène) et le poly(isoprène-butadiène-styrène) ;
(3) le caoutchouc naturel ;
(4) les copolymères obtenus par copolymérisation d'isobutène et d'isoprène (caoutchouc butyle), ainsi que les versions halogénées, en particulier chlorées ou bromée, de ces copolymères ;
(5) un mélange de plusieurs des élastomères précités (1) à (4) entre eux ;
(6) un mélange contenant une quantité majoritaire (allant de 51 % à 99,5 % et, de préférence, de 70 % à 99 % en poids) d'élastomère précité (1) ou (3) et une quantité minoritaire (allant de 49 % à 0,5 % et, de préférence, de 30 % à 1 % en poids) d'un ou plusieurs élastomères diéniques autres qu'isopréniques.

Par élastomère diénique autre qu'isoprénique, on entend de manière connue en soi : les homopolymères obtenus par polymérisation d'un des monomères diènes conjugués définis ci-avant au point (2.1), comme par exemple le polybutadiène et le polychloroprène ; les copolymères obtenus par copolymérisation d'au moins deux des diènes conjugués précités (2.1) entre eux ou par copolymérisation d'un ou plusieurs des diènes conjugués précités (2.1) avec un ou plusieurs monomères insaturés précités (2.2), (2.3) et/ou (2.4), comme par exemple le poly(butadiène-styrène) et le poly(butadiène-acrylonitrile).

A tire préférenctiel, on fait appel à un ou plusieurs élastomères isopréniques choisis parmi : (1) les polyisoprènes de synthèse homopolymères ; (2) les polyisoprènes de synthèse copolymères consistant dans le poly(isoprène-butadiène), le poly(isoprène-styrène) et le poly(isoprène-butadiène-styrène) ; (3) le caoutchouc naturel ; (4) le caoutcouc butyle ; (5) un mélange des élastomères précités (1) à (4) entre eux ; (6) un mélange contenant une quantité majoritaire d'élastomère précité (1) ou (3) et une quantité minoritaire d'élastomère diénique autre qu'isoprénique consistant dans le polybutadiène, le polychloroprène, le poly(butadiène-styrène) et le poly(butadiène-acrylonitrile).

A titre plus préférentiel, on fait appel à un ou plusieurs élastomères isopréniques choisis parmi : (1) les polyisoprènes de synthèse homopolymères ; (3) le caoutchouc naturel ; (5) un mélange des élastomères précités (1) et (3) ; (6) un mélange contenant une quantité majoritaire d'élastomère précité (1) ou (3) et une quantité minoritaire d'élastomère diénique autre qu'isoprénique consistant dans le polybutadiène et le poly(butadiène-styrène).

Dans le présent mémoire, on entend définir par l'expression "charge blanche renforçante", une charge "blanche" (c'est-à-dire inorganique ou minérale), parfois appelée charge "claire", capable de renforcer à elle seule, sans autre moyen que celui d'un agent de couplage, une composition d'élastomère(s) de type caoutchouc, naturels(s) ou synthétique(s).

L'état physique sous lequel se présente la charge blanche renforçante est indifférent, c'est-à-dire que ladite charge peut se présenter sous forme de poudre, de micro perles, de granulés ou de billes.

De manière préférentielle, la charge blanche renforçante consiste dans la silice, l'alumine ou un mélange de ces deux espèces.

De manière plus préférentielle, la charge blanche renforçante consiste dans la silice, prise seule ou en mélange avec de l'alumine.

A titre de silice susceptible d'être mise en oeuvre conviennent toutes les silices précipitées ou pyrogénées connues de l'homme de l'art présentant une surface spécifique BET ≤ à 450 m²/g. On préfère les silices de précipitation, celles-ci pouvant être classiques ou hautement dispersibles.

Par silice hautement dispersible, on entend toute silice ayant une aptitude à la désagglomération et à la dispersion dans une matrice polymérique très importante observable par microscopie électronique ou optique, sur coupes fines. Comme exemples non limitatifs de silices hautement dispersibles on peut citer celles ayant une surface spécifique CTAB égale ou inférieure à 450 m²/g et particulièrement celles décrites dans le brevet US-A-5 403 570 et les demandes de brevets WO-A-95/09127 et WO-A-95/09128 dont le contenu est incorporé ici. Conviennent aussi les silices précipitées traitées telles que par exemple les silices "dopées" à l'aluminium décrite dans la demande de brevet EP-A-0 735 088 dont le contenu est également incorporé ici.

A titre plus préférentiel, conviennent bien les silices de précipitation ayant :
- une surface spécifique CTAB allant de 100 à 240 m²/g, de préférence de 100 à 180 m²/g,
- une surface spécifique BET allant de 100 à 250 m²/g, de préférence de 100 à 190 m²/g,
- une prise d'huile DOP inférieure à 300ml/100 g, de préférence allant de 200 à 295 ml/100 g,
- un rapport spécifique BET/surface spécifique CTAB allant de 1,0 à 1,6.

Bien entendu par silice, on entend également des coupages de différentes silices. La surface spécifique CTAB est déterminée selon la méthode NFT 45007 de novembre 1987. La surface spécifique BET est déterminée selon la méthode de BRUNAUER, EMMET, TELLER décrite dans "The Journal of the American Chemical Society, vol. 80, page 309 (1938)" correspondant à la norme NFT 45007 de novembre 1987. La prise d'huile DOP est déterminée selon la norme NFT 30-022 (mars 1953) en mettant en oeuvre le dioctylphtalate.

A titre d'alumine renforçante, on utilise avantageusement une alumine hautement dispersible ayant :
- une surface spécifique BET allant de 30 à 400 m²/g, de préférence de 80 à 250 m²/g,
- une taille moyenne de particules au plus égale à 500 nm, de préférence au plus égale à 200 nm, et
- un taux élevé de fonctions réactives de surface Al-OH,
telle que décrite dans le document EP-A-0 810 258.

Comme exemples non limitatifs de pareilles alumines renforçantes, on citera notamment les alumines A125, CR125, D65CR de la société BATKOWSKI.

Bien entendu les compositions de type caoutchouc contiennent en outre tout ou partie des autres constituants et additifs auxiliaires habituellement utilisés dans le domaine des compositions d'élastomère(s) et de caoutchouc(s).

Ainsi, on peut mettre en oeuvre tout ou partie des autres constituants et additifs suivants :
- s'agissant du système de vulcanisation, on citera par exemple :
   - des agents de vulcanisation choisis parmi le soufre ou des composés donneurs de soufre, comme par exemple des dérivés de thiurame ;
   - des accélérateurs de vulcanisation, comme par exemple des dérivés de guanidine, des dérivés de thiazoles ou des dérivés de sulfénamides ;
   - des activateurs de vulcanisation comme, par exemple l'oxyde de zinc, l'acide stéarique et le stéarate de zinc ;
- s'agissant d'autre(s) additif(s), on citera par exemple :
   - une charge renforçante conventionnelle comme le noir de carbone (dans ce cas, la charge blanche renforçante mise en oeuvre constitue plus de 50 % du poids de l'ensemble charge blanche renforçante + noir de carbone) ;
   - une charge blanche conventionnelle peu ou non renforçante comme par exemple des argiles, la bentonite, le talc, la craie, le kaolin, le dioxyde de titane ou un mélange de ces espèces ;
   - des agents antioxydants ;
   - des agents antiozonants, comme par exemple la N-phényl-N'-(diméthyl-1,3 butyl)-p-phénylène-diamine ;
   - des agents de plastification et des agents d'aide à la mise en oeuvre.

La vulcanisation (ou cuisson) des compositions de type caoutchouc est conduite de manière connue à une température allant généralement de 130°C à 200°C, pendant un temps suffisant qui peut varier par exemple entre 5 et 90 minutes en fonction notamment de la température de cuisson, du système de vulcanisation adopté et de la cinétique de vulcanisation de la composition considérée.
Les exemples suivants illustrent la présente invention.

### EXEMPLE 1

Cet exemple illustre la préparation d'un composé organosilicique selon l'invention, comprenant un POS multifonctionnel.

Ce composé est préparé par mise en oeuvre du procédé (d) qui a été expliqué ci-avant dans le présent mémoire, avec comme organosilane de départ de formule (X), l'acide N-[y-propyl(méthyldiéthoxy)silane]maléamique.

### 1. Préparation du silane acide maléamique de départ :

On opère dans un réacteur en verre de 2 litres, équipé d'un système d'agitation et d'une ampoule de coulée. Le γ-aminopropylsilane de formule (C₂H₅O)₂CH₃Si(CH₂)₃NH₂ (244,82 g, soit 1,28 moles) est coulé progressivement à la température de 20°C (température de la réaction maintenue à cette valeur par l'intermédiaire d'un bain d'eau glacée placé sous le réacteur), sur une solution d'anhydride maléique (128,2 g, soit 1,307 moles) dans le toluène comme solvant (442,5 g), sur une période de 105 minutes. Le milieu réactionnel est ensuite abandonné à 23°C pendant 15 heures. Au bout de ce temps, le milieu réactionnel est filtré sur un verre fritté de porosité 3 et on récupère ainsi une solution du silane acide maléamique souhaité dans le toluène, solution qui est utilisée dans la forme où elle se trouve, pour la mise en oeuvre du procédé (d) suivant. Cette solution contient 0,157 mole de silane acide maléamique pour 100 g de solution.

### 2. Préparation du composé organosilicique comprenant un POS multifonctionnel par mise en oeuvre du procédé (d) :

- 1^{er} temps : dans un réacteur en verre de 0,5 litre, équipé d'un système d'agitation et d'une ampoule de coulée, on introduit du ZnCl₂ (43,78 g, soit 0,3214 mole), puis le solide est chauffé à 80°C pendant 1 heure 30 minutes sous une pression réduite de 3.10²Pa ; le réacteur est remis à la pression atmosphérique en opérant sous atmosphère d'argon et on coule ensuite progressivement 91,45 g de la solution de silane acide maléamique (41,5 g, soit 0,143 moles) dans le toluène, obtenue précédemment au point 1 ;
- 2^{ème} temps : on porte le mélange réactionnel à la température de 54°C, puis on procède à la coulée progressive de l'hexaméthyldisilazane (65,12 g, soit 0,403 mole) sur une période d'une heure ; en fin de coulée, la température du milieu réactionnel est de 82°C, et elle est maintenue à cette valeur pendant encore 1 heure 30 minutes ;
- 3^{ème} temps : on introduit dans le milieu réactionnel de la N-méthylmorpholine (20,14 g, soit 0,199 mole), puis du triméthylchlorosilane (21,49 g, soit 0,198 mole) en se plaçant à une température d'environ - 20°C ; le milieu réactionnel résultant est abandonné sous agitation pendant 15 heures, en laissant la température remonter lentement vers la température ambiante (23°C) ;
- 4^{ème} temps : le milieu réactionnel obtenu est filtré sur un verre fritté de porosité 3 et contenant 2 cm de silice, puis le filtrat obtenu est dévolatilisé à 30°C en établissant une pression réduite de 10.10² Pa pour conduire à une huile brune comprenant l'oligomère POS/1 de type imide souhaité. Ladite huile brune a été soumise à des analyses par RMN du proton et par RMN du silicium (²⁹Si). Les résultats de ces analyses révèlent que le produit de la réaction ou composé organosilicique obtenu à l'issue du procédé (d) renferme :
   - 62 % en poids de POS multifonctionnel ayant la forme d'un oligomère de formule moyenne : 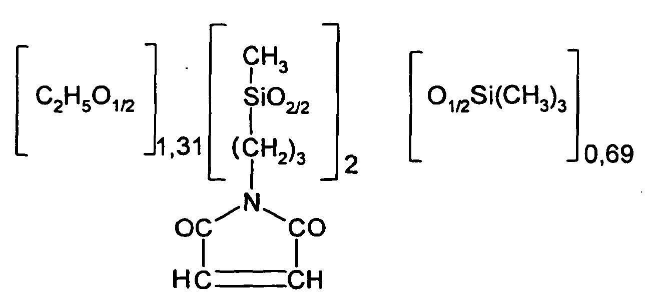 et 38 % en poids de l'organosilane de formule :

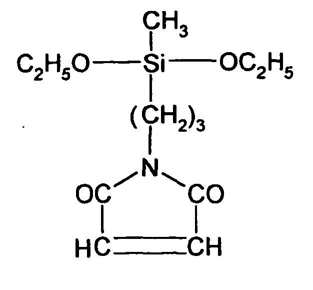

### EXEMPLE 2

Cet exemple illustre la préparation d'un composé organosilicique selon l'invention, comprenant un autre POS multifonctionnel.

Cet autre composé est préparé par mise en oeuvre du procédé (e) qui a été expliqué ci-avant dans le présent mémoire, avec comme organosilane de départ de formule (X), l'acide N-[γ-propyl(méthyldiéthoxy)silane]maléamique.

### 1.- Préparation du silane acide maléamique de départ :

On opère dans un réacteur en verre de 2 litres, équipé d'un système d'agitation et d'une ampoule de coulée. Le γ-aminopropylsilane de formule (C₂H₅O)₂CH₃Si(CH₂)₃NH₂ (563 g, soit 2,944 moles) est coulé progressivement à la température de 20 - 22°C (température de la réaction maintenue à cette valeur par l'intermédiaire d'un bain d'eau glacée placé sous le réacteur) sur une solution d'anhydride maléique (300,1 g, soit 3,062 moles) dans le toluène comme solvant (1008 g), sur une période de 2 heures. Le milieu réactionnel est ensuite abandonné à 23°C pendant 15 heures. Au bout de ce temps, le milieu réactionnel est filtré sur un verre fritté de porosité 3 et on récupère ainsi une solution du silane acide maléamique souhaité dans le toluène, solution qui est utilisée dans la forme où elle se trouve pour la mise en oeuvre du procédé (e) suivant. Cette solution contient 0,157 mole de silane acide maléamique pour 100 g de solution.

### 2.- Préparation du composé organositicique comprenant un autre POS multifonctionnel par mise en oeuvre du procédé (e) :

- 1^{er} temps : dans un réacteur en verre de 3 litres, équipé d'un système d'agitation et d'une ampoule de coulée, on introduit du ZnCl₂ (168,2 g, soit 1,2342 moles), puis le solide est chauffé à 80°C pendant 1 heure 30 minutes sous une pression réduite de 4.10²Pa ; le réacteur est remis ensuite à la pression atmosphérique en opérant sous atmosphère d'argon et on coule ensuite 365 cm³ de toluène, puis progressivement 704,8 g de la solution de silane acide maléamique (320 g, soit 1,107 moles) dans le toluène qui a été obtenue précédemment au point 1 ;
- 2^{ème} temps : l'ampoule de coulée est chargée par de l'hexaméthyltrisilazane cyclique (88,7 g, soit 0,404 mole) et par 208 cm³ de toluène ; la température du milieu réactionnel est de 72°C, puis on procède à la coulée progressive de l'hexaméthyltrisilazane cyclique sur une période de 2 heures 25 minutes ; en fin de coulée, la solution organique orangée obtenue est chauffée à une température de 75°C et elle est maintenue à cette température pendant 15 heures ;
- 4^{ème} temps : le milieu réactionnel est filtré sur "filtre carton", puis le toluène est éliminé après dévolatilisation sous pression réduite.

On obtient ainsi une huile jaune qui a été soumise à des analyses par RMN du proton et par RMN du silicium (²⁹Si). Les résultats de ces analyses révèlent que le produit de la réaction ou composé organosilicique obtenu à l'issue du procédé (e) renferme :
- 73,7 % en poids de POS multifonctionnel ayant la forme d'un oligomère de formule moyenne : 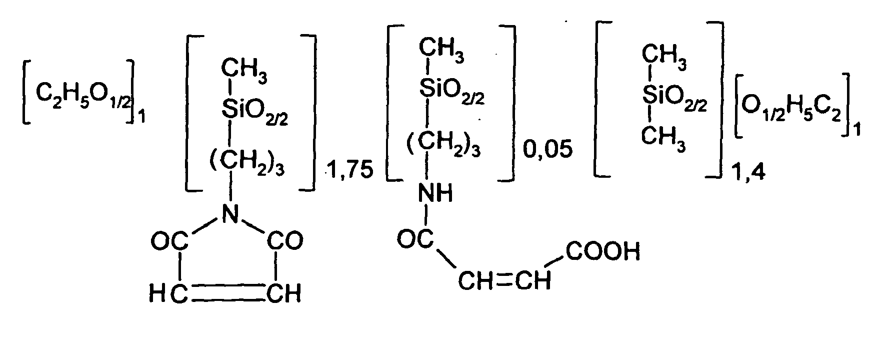
- 23,1 % en poids de l'organosilane de formule : 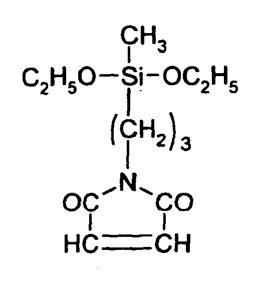
- 0,7 % en poids de l'organosilane de formule: 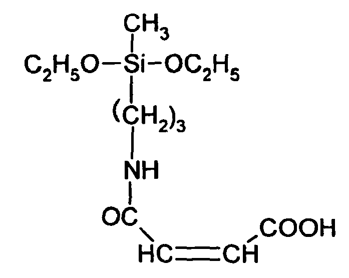 et 2,5 % en poids du POS monofonctionnel cyclique de formule moyenne :

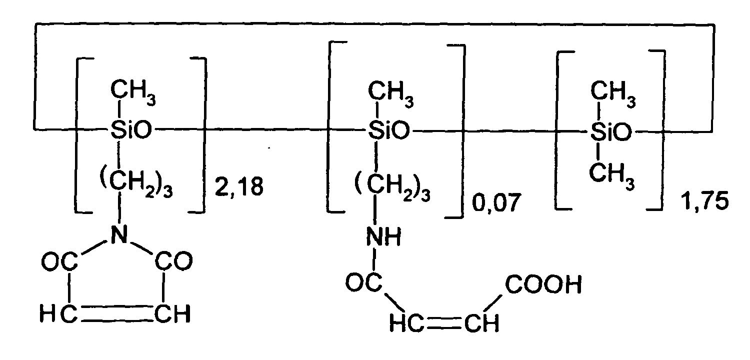

### EXEMPLES 3 et 4

Ces exemples ont pour but de démontrer les performances de couplage (charge blanche-élastomère isoprénique) d'un composé organosilicique comprenant un POS multifonctionnel qui a été défini ci-avant, porteur d'une part d'au moins un radical hydroxyle et/ou d'au moins un radical alkoxyle et d'autre part d'au moins une double liaison éthylénique activée de type maléimide. Ces performances sont comparées à celles d'un agent de couplage conventionnel à base d'un silane TESPT.

On compare 4 compositions d'élastomères isopréniques représentatives de formulations de semelles de chaussures. Ces 4 compositions sont identiques aux différences près qui suivent :
- composition n° 1 (témoin 1) : absence d'agent de couplage ;
- composition n° 2 (témoin 2) : agent de couplage à base de silane TESPT (4 pce) ;
- composition n° 3 (exemple 3) : agent de couplage ou composé organosilicique, apportant dans la composition 1,86 pce de POS multifonctionnel, préparé à l'exemple 1;
- composition n° 4 (exemple 4) : agent de couplage ou composé organosilicique, apportant dans la composition 2,65 pce de POS multifonctionnel, préparé à l'exemple 2.

### 1) Constitution des compositions d'élastomères isopréniques :

Dans un mélangeur interne de type BRABENDER, on prépare les compositions suivantes dont la constitution, exprimée en parties en poids, est indiquée dans le tableau I donné ci-après :

**Tableau I**

| Composition | | Témoin 1 | Témoin 2 | Ex. 3 | Ex. 4 |
|---|---|---|---|---|---|
| Caoutchouc NR | (1) | 85 | 85 | 85 | 85 |
| Caoutchouc BR 1220 | (2) | 15 | 15 | 15 | 15 |
| Silice | (3) | 50 | 50 | 50 | 50 |
| Oxyde de zinc | (4) | 5 | 5 | 5 | 5 |
| Acide stéarique | (5) | 2 | 2 | 2 | 2 |
| Silane TESPT | (6) | - | 4 | - | - |
| Composé organosilicique comprenant le POS multifonctionnel préparé à l'exemple 1 | | - | - | 3 | - |
| Composé organosilicique comprenant le POS multifonctionnel préparé à l'exemple 2 | | - | - | - | 3,6 |
| TBBS | (7) | 2 | 2 | 2 | 1 |
| DPG | (8) | 1,4 | 1,4 | 1,4 | 1,4 |
| Soufre | (9) | 1,7 | 1,7 | 1,7 | 1,7 |

| | | | | | |
|---|---|---|---|---|---|
| (1) Caoutchouc naturel, d'origine Malaisienne, commercialisé par la Société SAFIC-ALCAN sous la référence SMR 5L ; | | | | | |
| (2) Caoutchouc de polybutadiène à haut taux de produits d'addition cis-1,4, commercialisé par la Société SHELL ; | | | | | |
| (3) Silice Zéosil 1165 MP, commercialisé par la Société RHODIA - Silices ; | | | | | |
| (4) et (5) Activateurs de vulcanisation ; | | | | | |
| (6) Tétrasulfure de bis 3-triéthoxysilylpropyle, commercialisé par la Société DEGUSSA sous la dénomination Si-69 ; | | | | | |
| (7) N-tertiobutyl-2-benzothiazyl-sulfénamide (accélérateur de vulcanisation) ; | | | | | |
| (8) Diphényl guanidine (accélérateur de vulcanisation) ; | | | | | |
| (9) Agent de vulcanisation. | | | | | |

### 2) Préparation des compositions :

Dans un mélangeur interne de type BRABENDER, on introduit les divers constituants dans l'ordre, aux temps et aux températures indiqués ci-après :

| Temps | Température | Constituants |
|---|---|---|
| 0 minute | 80°C | Caoutchouc NR |
| 1 minute | 90°C | Caoutchouc BR |
| 2 minutes | 100°C | 2/3 silice + agent de couplage |
| 4 minutes | 120°C | 1/3 silice + acide stéarique + oxyde de zinc |
| 5 minutes | 140 à 150°C | vidange |

La vidange ou tombée du contenu du mélangeur se fait après 5 minutes. La température atteinte est d'environ 145°C.

Le mélange obtenu est introduit ensuite sur un mélangeur à cylindres, maintenu à 30°C, et on introduit le TBBS, la DPG et le soufre. Après homogénéisation, le mélange final est calandré sous la forme de feuilles de 2,5 à 3 mm d'épaisseur.

### 3) Propriétés rhéologiques des compositions :

Les mesures sont réalisées sur les compositions à l'état cru. On a porté dans le tableau II suivant les résultats concernant le test de rhéologie qui est conduit à 160°C pendant 30 minutes à l'aide d'un rhéomètre MONSANTO 100 S.

Selon ce test la composition à tester est placée dans la chambre d'essai régulée à la température de 160°C, et on mesure le couple résistant, opposé par la composition, à une oscillation de faible amplitude d'un rotor biconique inclus dans la chambre d'essai, la composition remplissant complètement la chambre considérée. A partir de la courbe de variation du couple en fonction du temps, on détermine : le couple minimum qui reflète la viscosité de la composition à la température considérée ; le couple maximum et le delta-couple qui reflètent le taux de réticulation entraîné par l'action du système de vulcanisation ; le temps T-90 nécessaire pour obtenir un état de vulcanisation correspondant à 90 % de la vulcanisation complète (ce temps est pris comme optimum de vulcanisation) ; et le temps de grillage TS-2 correspondant au temps nécessaire pour avoir une remontée de 2 points au-dessus du couple minimum à la température considérée (160°C) et qui reflète le temps pendant lequel il est possible de mettre en oeuvre les mélanges crus à cette température sans avoir d'initiation de la vulcanisation.

Les résultats obtenus sont indiqués dans le tableau II :

**Tableau II**

| Rhéologie MONSANTO | Témoin 1 | Témoin 2 | Exemple 3 | Exemple 4 |
|---|---|---|---|---|
| Couple mini | 27,1 | 15,3 | 18,2 | 15,7 |
| Couple maxi | 81,5 | 108,5 | 92,8 | 97,8 |
| Delta-couple | 54,4 | 93,2 | 74,6 | 82,1 |
| TS-2 (minutes) | 4 | 3,6 | 3,1 | 2,5 |
| TS-90 (minutes) | 7,4 | 7,33 | 6,4 | 5,69 |

### 4) Propriétés mécaniques des vulcanisats :

Les mesures sont réalisées sur les compositions uniformément vulcanisées 20 minutes à 160°C.

Les propriétés mesurées et les résultats obtenus sont rassemblés dans le tableau III suivant :

**Tableau III**

| Propriétés mécaniques | | Témoin 1 | Témoin 2 | Ex. 3 | Ex. 4 |
|---|---|---|---|---|---|
| Module 10 % | (1) | 0,65 | 0,89 | 0,75 | 0,81 |
| Module 100 % | (1) | 1,31 | 3,54 | 2,56 | 2,9 |
| Module 300 % | (1) | 3,7 | 15,2 | 12,3 | 14,1 |
| Allongement à la rupture | (1) | 810 | 370 | 480 | 400 |
| Résistance à la rupture | (1) | 23,8 | 19 | 24 | 21 |
| Indices de renforcement : M 300 %/M 100 % | | 2,8 | 4,3 | 4,8 | 4,9 |
| Dureté Shore A | (2) | 65 | 74 | 70 | 70 |
| Résistance à l'abrasion | (3) | 227 | 113 | 89 | 90 |

| | | | | | |
|---|---|---|---|---|---|
| (1) Les essais de traction sont réalisés conformément aux indications de la norme NF T 46-002 avec des éprouvettes de type H2. Les modules 10 %, 100 %, 300 %, et la résistance à la rupture sont exprimés en MPa ; l'allongement à la rupture est exprimé en %. | | | | | |
| (2) La mesure est réalisée selon les indications de la norme ASTM D 3240. La valeur donnée est mesurée à 15 secondes. | | | | | |
| (3) La mesure est réalisée selon les indications de la norme NF T 46-012 en utilisant la méthode 2 avec porte éprouvette tournant. La valeur mesurée est la perte de substance (en mm³) à l'abrasion ; plus elle est faible et meilleure est la résistance à l'abrasion. | | | | | |

Nous constatons que, après cuisson, les compositions des exemples 3 et 4 présentent des valeurs de modules sous forte déformation (M 300 %) et d'indices de renforcement plus élevées que le mélange témoin sans agent de couplage et qui peuvent être supérieures à celles obtenues avec le silane TESPT (témoin 2).

Notons également que tous les mélanges cités présentent une résistance à l'abrasion très sensiblement supérieure à celle du témoin 1.

L'amélioration de ces indicateurs est connue de l'homme de métier comme démontrant une amélioration significative du couplage charge blanche-élastomère due à un incontestable effet couplant des agents de couplage introduits dans les compositions des exemples 3 et 4.

Soulignons tout particulièrement que l'agent de couplage utilisé dans l'exemple 4 (composé comprenant le POS multifonctionnel préparé à l'exemple 2) conduit à un compromis particulièrement intéressant de propriétés puisqu'il permet d'obtenir tout à la fois :
- des viscosités proches de celles atteintes avec le TESPT (témoin 2),
- un module à 300 % assez proche de celui conféré par le TESPT,
- un indice de renforcement sensiblement plus élevé que celui obtenu avec le TESPT,
- un excellent niveau de résistance à l'abrasion sensiblement meilleur que celui conféré par le TESPT.

## Revendications

1. Procédé de préparation des composés organosiliciques comprenant les polyorganosiloxanes multifonctionnels essentiellement linéaires qui possèdent la formule moyenne suivante : 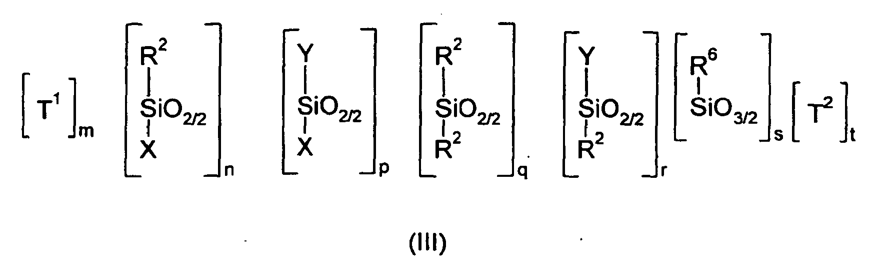 dans laquelle :
(1') les symboles T¹ sont choisis parmi les motifs HO_{1/2} et R¹O_{1/2}, où le radical R¹ représente un radical alkyle, linéaire ou ramifié, ayant de 1 à 15 atomes de carbone ;
(2') les symboles T², identiques ou différents des symboles T¹, sont choisis parmi les motifs HO_{1/2}, R¹O_{1/2} et le motif (R²)₃SiO_{1/2}, où le radical R¹ est tel que défini ci-avant au point (1') et où les radicaux R², identiques ou différents, représentent chacun un groupe hydrocarboné monovalent choisi parmi un radical alkyle, linéaire ou ramifié; ayant de 1 à 6 atomes de carbones, un radical cycloalkyle ayant de 5 à 8 atomes de carbone, et un radical phényle ;
(3') * les symboles R² sont tels que définis ci-avant aux points (2') ; * les symboles X, identiques ou différents, représentent chacun une fonction portant une double liaison éthylénique activée, choisie parmi les radicaux ayant les formules (II/1), (II/2), (II/3) suivantes, et leurs mélanges : 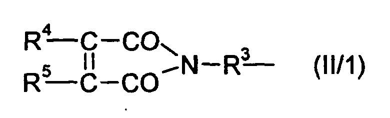 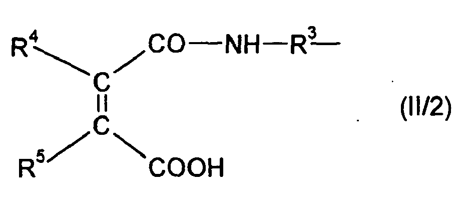 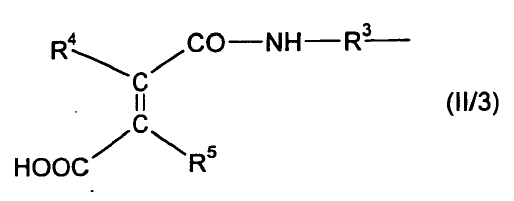
• avec les conditions selon lesquelles :
- au moins une des fonctions X répond à la formule (II/1),
- quand, le cas échéant, on a un mélange de fonction(s) X de formule (II/1) avec des fonctions X de formules (II/2) et/ou (II/3), la fraction molaire de fonctions X de formules (II/2) et/ou (II/3) dans l'ensemble des fonctions X est en moyenne égale ou inférieure à 12 % en mole,
• formules dans lesquelles :
+ R³ est un radical divalent alkylène, linéaire ou ramifié, comprenant de 1 à 15 atomes de carbone dont la valence libre est portée par un atome de carbone et est reliée à un atome de silicium, ledit radical R³ pouvant être interrompu au sein de la chaîne alkylène par au moins un hétéroatome (comme l'oxygène et l'azote) ou au moins un groupement divalent comprenant au moins un hétéroatome (comme l'oxygène et l'azote), et en particulier par au moins un reste divalent de formule générale ^{V1}reste^{V2} choisi parmi : -O-, -CO-, -CO-O-, -COO-cyclohexylène (éventuellement substitué par un radical OH)-, -O-alkylène (linéaire ou ramifié en C₂-C₆, éventuellement substitué par un radical OH ou COOH)-, -O-CO-alkylène (linéaire ou ramifié en C₂-C₆, éventuellement substitué par un radical OH ou COOH)-, -CO-NH-, -O-CO-NH-, et -NH-alkylène (linéaire ou ramifié en C₂-C₆)-CO-NH- ; R³ représente encore un radical aromatique divalent de formule générale ^{V1}radical^{V2} choisi parmi : -phénylène(ortho, méta ou para)-alkylène (linéaire ou ramifié en C₂-C₆)-, -phénylène(ortho, méta ou para)-O-alkylène (linéaire ou ramifié en C₂-C₆)-, -alkylène(linéaire ou ramifié en C₂-C₅)- phénylène(ortho, méta ou para)-alkylène (linéaire ou ramifié en C₁-C₆-, et -alkylène (linéaire ou ramifié en C₂-C₆)-phénylène (ortho, méta ou para)-O-alkylène (linéaire ou ramifié en C₁-C₆)- ; de manière préférée, le symbole R³ représente un radical alkylène qui répond aux formules suivantes : -(CH₂)₂-, -(CH₂)₃-, -(CH₂)₄-, -CH₂-CH(CH₃)-, -(CH₂)₂-CH(CH₃)-CH₂-, -(CH₂)₃-O-(CH₂)₃-, -(CH₂)₃-O-CH₂-CH(CH₃)-CH₂-, -(CH₂)₃-O-CH₂CH(OH)-CH₂- ; de manière plus préférée, R³ est un radical -(CH₂)₂- ou -(CH₂)₃- ; avec la précision selon laquelle, dans les définitions de R³ qui précèdent, les restes et radicaux divalents mentionnnés quand ils ne sont pas symétriques, peuvent être positionnés avec la valence v1 à gauche et à la valence v2 à droite ou inversement avec la valence v2 à gauche et la valence v1 à droite ;
+ les symboles R⁴ et R⁵, identiques ou différents, représentent chacun un atome d'hydrogène, un atome d'halogène, un radical cyano ou un radical alkyle, linéaire ou ramifié, ayant de 1 à 6 atomes de carbone ;
• et les symboles Y, identiques ou différents, représentent chacun une fonction hydroxyle ou alkoxyle R¹O où R¹ est tel que défini ci-avant au point (1') ;
(4') les symboles R⁶ sont choisis parmi les radicaux répondant aux définitions de R², X et Y;
(5') les symboles m, n, p, q, r, s et t représentent chacun des nombres entiers ou fractionnaires qui répondent aux conditions cumulatives suivantes :
■ m et t sont l'un et l'autre des nombres toujours différents de zéro dont la somme est égale à 2 + s,
■ n se situe dans l'intervalle allant de 0 à 50,
■ p se situe dans l'intervalle allant de 0 à 20,
■ quand n = 0, p est au moins égal à 1 et quand p = 0, n est au moins égal à 1,
■ q = 0,
■ r se situe dans l'intervalle allant de 0 à 10,
■ s se situe dans l'intervalle allant de 0 à 1,
■ la somme n + p + q + r + s + t donnant le nombre total d'atomes de silicium se situe dans l'intervalle allant de 2 à 50,
■ le rapport 100 s / (n + p + q + r + s + t) donnant le taux de motifs "T" est ≤ à 10,
■ le rapport 100 (m + p + r + s [quand R⁶ = Y] + t) / (n + p + q + r + s + t) donnant le taux de fonctions Y va de 4 à 100,
■ le rapport 100 (n + p + s [quand R³ = X]) / (n + p + q + r + s + t) donnant le taux de fonctions X va de 10 à 100 ;
ledit procédé étant **caractérisé en ce qu'**il consiste à réaliser les étapes (d1) et (d2) suivantes :
(d1) on fait réagir:
- un organosilane de formule : 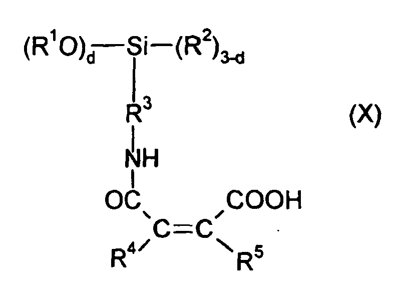
- avec un disilazane de formule :
(R²)₃Si―NH―Si(R²)₃ (XI)
formules dans lesquelles les symboles R¹, R², R³, R⁴ et R⁵ sont des radicaux répondant aux définitions données aux points (1') à (3') concernant la formule (III) et d est un nombre choisi parmi 2 ou 3,
- cette réaction étant effectuée en présence d'un catalyseur, supporté ou non sur une matière minérale, à base d'au moins un acide de Lewis, en opérant à la pression atmosphérique et à une température se situant dans l'intervalle allant de la température ambiante (23°C) à 150°C ;
(d2) on procède à la stabilisation du milieu réactionnel obtenu par traitement de ce dernier avec au moins un halogénosilane de formule (R²)₃ Si-halogéno, en opérant en présence d'au moins une base organique non nucléophile et non réactive vis-à-vis de la fonction imide formée in situ au cours de l'étape (d1).

2. Procédé de préparation des composés organosiliciques comprenant les polyorganosiloxanes multifonctionnels essentiellement linéaires qui possèdent la formule moyenne suivante : 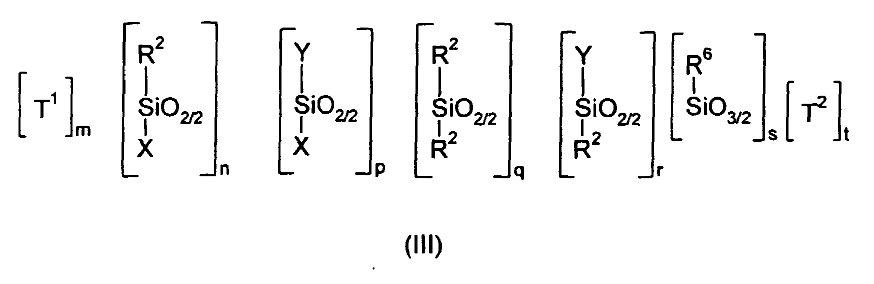 dans laquelle :
(1') les symboles T¹ sont choisis parmi les motifs HO_{1/2} et R¹O_{1/2}, où le radical R¹ représente un radical alkyle, linéaire ou ramifié, ayant de 1 à 15 atomes de carbone ;
(2') les symboles T², identiques ou différents des symboles T¹, sont choisis parmi les motifs HO_{1/2}, R¹O_{1/2} et le motif (R²)₃SiO_{1/2}, où le radical R¹ est tel que défini ci-avant au point (1') et où les radicaux R², identiques ou différents, représentent chacun un groupe hydrocarboné monovalent choisi parmi un radical alkyle, linéaire ou ramifié, ayant de 1 à 6 atomes de carbones, un radical cycloalkyle ayant de 5 à 8 atomes de carbone, et un radical phényle ;
(3') **·**les symboles R² sont tels que définis ci-avant aux points (2') ; · les symboles X, identiques ou différents, représentent chacun une fonction portant une double liaison éthylénique activée, choisie parmi les radicaux ayant les formules (II/1), (II/2), (II/3) suivantes, et leurs mélanges : 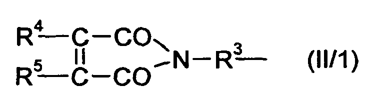 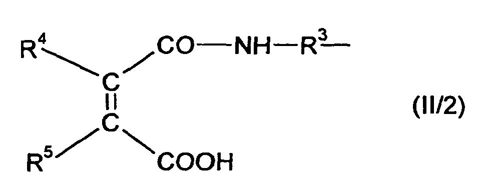 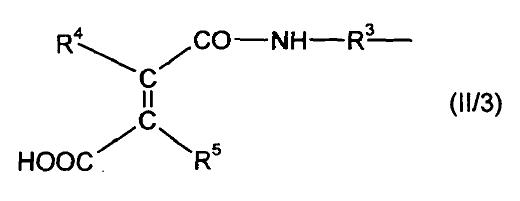
• avec les conditions selon lesquelles :
- au moins une des fonctions X répond à la formule (II/1),
- quand, le cas échéant, on a un mélange de fonction(s) X de formule (II/1) avec des fonctions X de formules (II/2) et/ou (II/3), la fraction molaire de fonctions X de formules (II/2) et/ou (II/3) dans l'ensemble des fonctions X est en moyenne égale ou inférieure à 12 % en mole,
• formules dans lesquelles :
+ R³ est un radical divalent alkylène, linéaire ou ramifié, comprenant de 1 à 15 atomes de carbone dont la valence libre est portée par un atome de carbone et est reliée à un atome de silicium, ledit radical R³ pouvant être interrompu au sein de la chaîne alkylène par au moins un hétéroatome (comme l'oxygène et l'azote) ou au moins un groupement divalent comprenant au moins un hétéroatome (comme l'oxygène et l'azote), et en particulier par au moins un reste divalent de formule générale ^{V1}reste^{V2} choisi parmi : -O-, -CO-, -CO-O-, -COO-cyclohexylène (éventuellement substitué par un radical OH)-, -O-alkylène (linéaire ou ramifié en C₂-C₆, éventuellement substitué par un radical OH ou COOH)-, -O-CO-alkylène (linéaire ou ramifié en C₂-C₆, éventuellement substitué par un radical OH ou COOH)-, -CO-NH-, -O-CO-NH-, et -NH-alkylène (linéaire ou ramifié en C₂-C₆)-CO-NH- ; R³ représente encore un radical aromatique divalent de formule générale ^{V1}radical^{V2} choisi parmi : -phénylène(ortho, méta ou para)-alkylène (linéaire ou ramifié en C₂-C₆)-, -phénylène(ortho, méta ou para)-O-alkylène (linéaire ou ramifié en C₂-C₆)-, -alkylène(linéaire ou ramifié en C₂-C₆)- phénylène(ortho, méta ou para)-alkylène (linéaire ou ramifié en C₁-C₆-, et -alkylène (linéaire ou ramifié en C₂-C₆)-phénylène (ortho, méta ou para)-O-alkylène (linéaire ou ramifié en C₁-C₆)- ; de manière préférée, le symbole R³ représente un radical alkylène qui répond aux formules suivantes : -(CH₂)₂-, -(CH₂)₃-, -(CH₂)₄-, -CH₂-CH(CH₃)-, -(CH₂)₂-CH(CH₃)-CH₂-, -(CH₂)₃-O-(CH₂)₃-, -(CH₂)₃-O-CH₂-CH(CH₃)-CH₂-, -(CH₂)₃-O-CH₂CH(OH)-CH₂- ; de manière plus préférée, R³ est un radical -(CH₂)₂- ou -(CH₂)₃- ; avec la précision selon laquelle, dans les définitions de R³ qui précèdent, les restes et radicaux divalents mentionnnés quand ils ne sont pas symétriques, peuvent être positionnés avec la valence v1 à gauche et à la valence v2 à droite ou inversement avec la valence v2 à gauche et la valence v1 à droite ;
+ les symboles R⁴ et R⁵, identiques ou différents, représentent chacun un atome d'hydrogène, un atome d'halogène, un radical cyano ou un radical alkyle, linéaire ou ramifié, ayant de 1 à 6 atomes de carbone ;
• et les symboles Y, identiques ou différents, représentent chacun une fonction hydroxyle ou alkoxyle R¹O où R¹ est tel que défini ci-avant au point (1') ;
(4') les symboles R⁶ sont choisis parmi les radicaux répondant aux définitions de R², X et Y;
(5') les symboles m, n, p, q, r, s et t représentent chacun des nombres entiers ou fractionnaires qui répondent aux conditions cumulatives suivantes :
■ m et t sont l'un et l'autre des nombres toujours différents de zéro dont la somme est égale à 2 + s,
■ n se situe dans l'intervalle allant de 0 à 50,
■ p se situe dans l'intervalle allant de 0 à 20,
■ quand n = 0, p est au moins égal à 1 et quand p = 0, n est au moins égal à 1,
■ q est différent de zéro et au plus égal à 48,
■ r se situe dans l'intervalle allant de 0 à 10,
■ s se situe dans l'intervalle allant de 0 à 1,
■ la somme n + p + q + r + s + t donnant le nombre total d'atomes de silicium se situe dans l'intervalle allant de 2 à 50,
■ le rapport 100 s/(n + p + q + r + s + t) donnant le taux de motifs "T" est ≤ à 10,
■ le rapport 100 (m + p+ r+s [quand R⁶=Y] +t) / (n + p + q + r + s + t) donnant le taux de fonctions Y va de 4 à 100,
■ le rapport 100 (n + p + s [quand R⁶ = X]) / (n + p + q + r + s + t) donnant le taux de fonctions X va de 10 à 100 ;
ledit procédé étant **caractérisé en ce qu'**il consiste à faire réagir :
- un organosilane de formule : 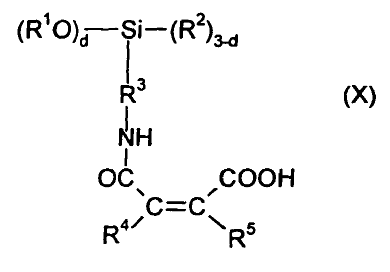
- avec un polysilazane de formule : 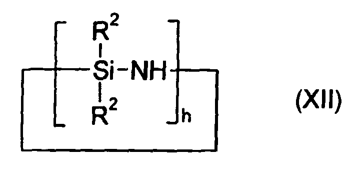 formules dans lesquelles les symboles R¹, R², R³, R⁴ et R⁵ sont des radicaux répondant aux définitions données aux points (1') à (3') concernant la formule (III) et h est un nombre allant de 3 à 8,
- cette réaction étant effectuée en présence d'un catalyseur, supporté ou non sur une matière minérale, à base d'au moins un acide de Lewis, en opérant à la pression atmosphérique et à une température se situant dans l'intervalle allant de la température ambiante (23°C) à 150°C.

3. Procédé de préparation selon la revendication 1 ou 2, **caractérisé en ce que** dans la formule (III) :
(1) les symboles R² sont choisis parmi les radicaux : méthyle, éthyle, n-propyle, isopropyle, n-butyle, n-pentyle, cyclohexyle et phényle ;
(2) les symboles Y sont choisis parmi un radical hydroxyle et un radical alkoxyle, linéaire ou ramifié, ayant de 1 à 6 atomes de carbone ;
(3) les fonctions représentées par le symbole X sont choisies parmi les fonctions de formules (II/1), (II/2), (II/3) et leurs mélanges dans lesquelles :
- quand, le cas échéant, on a un mélange de fonction(s) X de formule (II/1) avec des fonctions X de formules (II/2 et/ou II/3), la fraction molaire de fonctions X de formule (II/2) et/ou (II/3) dans l'ensemble des fonctions X est en moyenne égale ou inférieure à 5 % en mole ;
- le symbole R³ représente un radical alkylène qui répond aux formules suivantes :
- (CH₂)₂-, -(CH₂)₃-, -(CH₂)₄-, -CH₂CH(CH₃)-, -(CH₂)₂-CH(CH₃)-CH₂-,
- (CH₂)₃-O-(CH₂)₃-, -(CH₂)₃-O-CH₂-CH(CH₃)-CH₂-, -(CH₂)₃-O-CH₂CH(OH)-CH₂- ;
- les symboles R⁴ et R⁵ sont choisis parmi un atome d'hydrogène, un atome de chlore, et les radicaux méthyle, éthyle, n-propyle, n-butyle.

4. Procédé de préparation selon la revendication 1 ou 3, **caractérisé en ce que** l'on fait appel aux conditions opératoires suivantes :
- le disilazane (XI) est utilisé en quantité au moins égale à 0,5 mole pour 1 mole d'organosilane (X) de départ ;
- l'acide de Lewis est utilisé en quantité au moins égale à 0,5 mole pour 1 mole d'organosilane (X) de départ ;
- le (ou les) halogénosilane(s) de l'étape de stabilisation est (sont) utilisé(s) en quantité au moins égale à 0,5 mole pour 1 mole d'organosilane (X) de départ ;
- la (les) base(s) organique(s) de l'étape de stabilisation est (sont) utilisée(s) en quantité au moins égale à 0,5 mole pour 1 mole d'organosilane (X) de départ.

5. Procédé de préparation selon la revendication 2 ou 3, **caractérisé en ce que** l'on fait appel aux conditions opératoires suivantes :
- le polysilazane (XII) est utilisé en quantité au moins égale à 0,5/h mole pour 1 mole d'organosilane (X) de départ, h étant le nombre de motifs silazane dans le polysilazane de formule (XII) ;
- l'acide de Lewis est utilisé en quantité au moins égale à 0,5 mole pour 1 mole d'organosilane (X) de départ.

## Claims

1. Process for preparing organosilicon compounds comprising essentially linear multifunctional polyorganosiloxanes having the following mean formula: 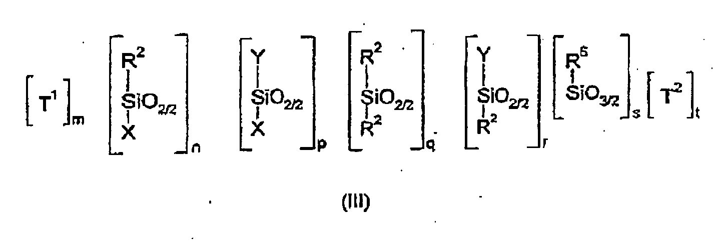 in which:
(1') the symbols T¹ are chosen from units HO_{1/2} and R¹O_{1/2} in which the radical R¹ represents a linear or branched alkyl radical containing from 1 to 15 carbon atoms;
(2') the symbols T², which may be identical to or different from the symbols T¹, are chosen from units HO_{1/2}, R¹O_{1/2} and the unit (R²)₃SiO_{1/2}, in which the radical R¹ is as defined above in point (1') and in which the radicals R², which may be identical or different, each represent a monovalent hydrocarbon-based group chosen from a linear or branched alkyl radical containing from 1 to 6 carbon atoms, a cycloalkyl radical containing from 5 to 8 carbon atoms, and a phenyl radical;
(3') · the symbols R² are as defined above in point (2'); · the symbols X, which may be identical or different, each represent a function bearing an activated ethylenic double bond, chosen from the radicals having the formulae (II/1), (II/2) and (II/3) below, and mixtures thereof: 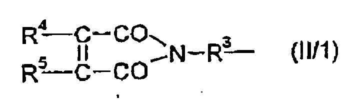 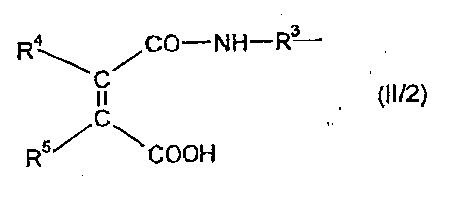 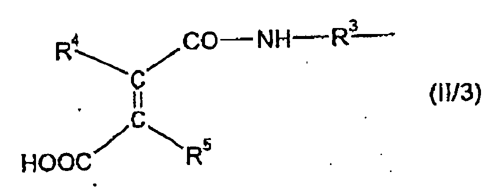
• with the conditions according to which:
- at least one of the functions X corresponds to formula (II/1),
- when, where appropriate, there is a mixture of function(s) X of formula (II/1) with functions X of formulae (II/2) and/or (II/3), the mole fraction of functions X of formulae (II/2) and/or (II/3) in all of the functions X is on average equal to or less than 12 mol%,
• in which formulae:
+ R³ is a linear or branched divalent alkylene radical containing from 1 to 15 carbon atoms, the free valency of which is borne by a carbon atom and is linked to a silicon atom, the said radical R³ possibly being interrupted in the alkylene chain with at least one heteroatom (for instance oxygen and nitrogen) or at least one divalent group comprising at least one heteroatom (for instance oxygen and nitrogen), and in particular with at least one divalent residue of general formula ^{v1}residue^{v2} chosen from: -O-, -CO-, -CO-O-, -COO-cyclohexylene (optionally substituted with an OH radical)-, -O-alkylene (linear or branched C₂-C₆, optionally substituted with an OH or COOH radical)-, -O-CO-alkylene (linear or branched C₂-C₆, optionally substituted with an OH or COOH radical)-, -CO-NH-, -O-CO-NH-, and -NH-alkylene (linear or branched C₂-C₆)-CO-NH-; R³ also represents a divalent aromatic radical of general formula ^{v1}radical^{v2} chosen from: - (ortho, meta or para)-phenylene-(linear or branched C₂-C₆)-alkylene, -(ortho, meta or para)-phenylene-O-(linear or branched C₂-C₆)-alkylene, (linear or branched C₂-C₆) -alkylene- (ortho, meta or para)-phenylene-(linear or branched C₁-C₆)-alkylene, and (linear or branched C₂-C₆)-alkylene-(ortho, meta or para)-phenylene-O-(linear or branched C₁-C₆)-alkylene; preferably, the symbol R³ represents an alkylene radical that corresponds to the following formulae: -(CH₂)₂-, -(CH₂)₃-, -(CH₂)₄-, -CH₂₋CH(CH₃)-, -(CH₂)₂-CH(CH₃)-CH₂-, -(CH₂)₃-O-(CH₂)₃-, -(CH₂)₃-O-CH₂-CH(CH₃)-CH₂-, -(CH₂)₃-O-CH₂CH(OH)-CH₂-; more preferably, R³ is a -(CH₂)₂- or -(CH₂)₃₋radical; with the precision according to which, in the definitions of R³ above, the divalent residues and radicals mentioned, when they are not symmetrical, may be positioned with the valency v1 to the left and with the valency v2 to the right or, conversely, with the valency v2 to the left and the valency v1 to the right;
+ the symbols R⁴ and R⁵, which may be identical or different, each represent a hydrogen atom, a halogen atom, a cyano radical or a linear or branched alkyl radical containing from 1 to 6 carbon atoms;
· and the symbols Y, which may be identical or different, each represent a hydroxyl or alkoxyl function R¹O in which R¹ is as defined above in point (1') ;
(4') the symbols R⁶ are chosen from radicals corresponding to the definitions of R², X and Y;
(5') the symbols m, n, p, q, r, s and t each represent integers or fractional numbers that satisfy the following cumulative conditions:
■ m and t are each numbers that are always other than zero, the sum of which is equal to 2 + s,
■ n is in the range from 0 to 50,
■ p is in the range from 0 to 20,
■ when n = 0, p is at least equal to 1 and when p = 0, n is at least equal to 1,
■ q = 0,
■ r is in the range from 0 to 10,
■ s is in the range from 0 to 1,
■ the sum n + p + q + r + s + t giving the total number of silicon atoms is in the range from 2 to 50,
■ the ratio 100 s/(n + p + q + r + s + t) giving the content of units "T" is ≤ 10,
■ the ratio 100 (m + p + r + s [when R⁶ = Y] + t) / (n + p + q + r + s + t) giving the content of functions Y ranges from 4 to 100,
■ the ratio 100 (n + p + s [when R⁶ = X])/(n + p + q + r + s + t) giving the content of functions X ranges from 10 to 100;
the said process being **characterized in that** it consists in performing steps (d1) and (d2) below:
(d1) :
- an organosilane of formula: 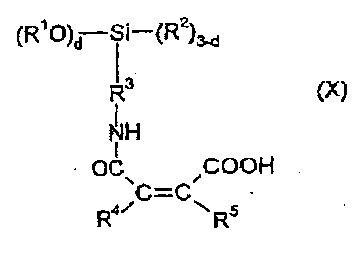
- is reacted with a disilazane of formula:
(R²)₃Si―NH―Si(R²)₃ (XI)
in which formulae the symbols R¹, R², R³, R⁴ and R⁵ are radicals corresponding to the definitions given in points (1') to (3') concerning formula (III) and d is a number chosen from 2 or 3,
- this reaction being performed in the presence of a catalyst, optionally supported on a mineral material, based on at least one Lewis acid, working at atmospheric pressure and at a temperature in the range from room temperature (23°C) to 150°C;
(d2) the reaction medium obtained is stabilized by treating it with at least one halosilane of formula (R²)₃ Si-halo, working in the presence of at least one non-nucleophilic organic base that is unreactive towards the imide function formed in situ during step (d1).

2. Process for preparing organosilicon compounds comprising essentially linear multifunctional polyorganosiloxanes having the following mean formula: 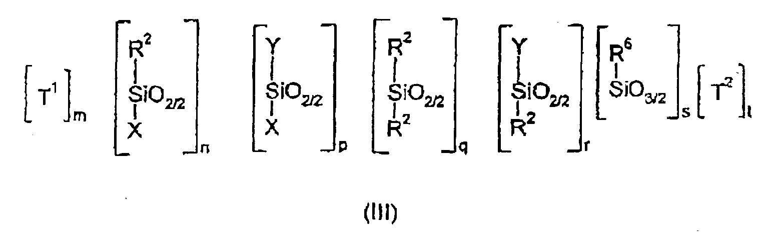 in which:
(1') the symbols T¹ are chosen from units HO_{1/2} and R¹O_{1/2} in which the radical R¹ represents a linear or branched alkyl radical containing from 1 to 15 carbon atoms;
(2') the symbols T², which may be identical to or different from the symbols T¹, are chosen from units HO_{1/2}, R¹O_{1/2} and the unit (R²)₃SiO_{1/2}, in which the radical R¹ is as defined above in point (1') and in which the radicals R², which may be identical or different, each represent a monovalent hydrocarbon-based group chosen from a linear or branched alkyl radical containing from 1 to 6 carbon atoms, a cycloalkyl radical containing from 5 to 8 carbon atoms, and a phenyl radical;
(3') · the symbols R² are as defined above in point (2'); the symbols X, which may be identical or different, each represent a function bearing an activated ethylenic double bond, chosen from the radicals having the formulae (II/1), (II/2) and (II/3) below, and mixtures thereof: 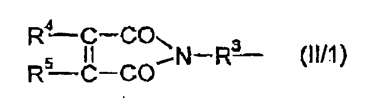 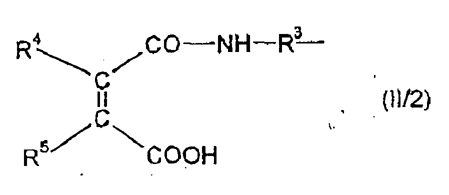 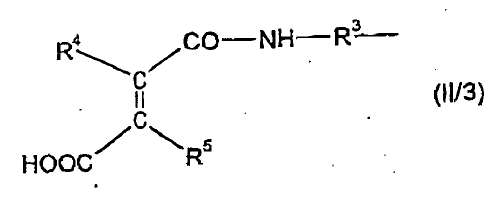
• with the conditions according to which:
- at least one of the functions X corresponds to formula (II/1),
- when, where appropriate, there is a mixture of function(s) X of formula (II/1) with functions X of formulae (II/2) and/or (II/3), the mole fraction of functions X of formulae (II/2) and/or (II/3) in all of the functions X is on average equal to or less than 12 mol%,
• in which formulae:
+ R³ is a linear or branched divalent alkylene radical containing from 1 to 15 carbon atoms, the free valency of which is borne by a carbon atom and is linked to a silicon atom, the said radical R³ possibly being interrupted in the alkylene chain with at least one heteroatom (for instance oxygen and nitrogen) or at least one divalent group comprising at least one heteroatom (for instance oxygen and nitrogen), and in particular with at least one divalent residue of general formula ^{v1}residueL^{v2} chosen from: -O-, -CO-, -CO-O-, -COO-cyclohexylene (optionally substituted with an OH radical)-, -O-alkylene (linear or branched C₂-C₆, optionally substituted with an OH or COOH radical)-, -O-CO-alkylene (linear or branched C₂-C₆, optionally substituted with an OH or COOH radical)-, -CO-NH-, -O-CO-NH-, and -NH-alkylene (linear or branched C₂-C₆)-CO-NH-; R³ also represents a divalent aromatic radical of general formula ^{v1}radical^{v2} chosen from: - (ortho, meta or para)-phenylene-(linear or branched C₂-C₆) alkylene, - (ortho, meta or para)-phenylene-O-(linear or branched C₂-C₆)-alkylene, (linear or branched C₂-C₆)-alkylene-(ortho, meta or para)-phenylene-(linear or branched C₁-C₆)-alkylene, and (linear or branched C₂-C₆)-alkylene-(ortho, meta or para) -phenylene-O- (linear or branched C₁-C₆)-alkylene; preferably, the symbol R³ represents an alkylene radical that corresponds to the following formulae: (CH₂)₂-, -(CH₂)₃-, -(CH₂)₄-, -CH₂₋CH(CH₃) -, -(CH₂)₂-CH(CH₃)-CH₂-, -(CH₂)₃-O-(CH₂)₃-, -(CH₂)₃-O-CH₂-CH(CH₃)-CH₂-, -(CH₂)₃-C-CH₂CH(OH)-CH₂-; more preferably, R³ is a -(CH₂)₂- or -(CH₂)₃₋radical; with the precision according to which, in the definitions of R³ above, the divalent residues and radicals mentioned, when they are not symmetrical, may be positioned with the valency v1 to the left and with the valency v2 to the right or, conversely, with the valency v2 to the left and the valency v1 to the right;
+ the symbols R⁴ and R⁵, which may be identical or different, each represent a hydrogen atom, a halogen atom, a cyano radical or a linear or branched alkyl radical containing from 1 to 6 carbon atoms;
· and the symbols Y, which may be identical or different, each represent a hydroxyl or alkoxyl function R¹O in which R¹ is as defined above in point (1');
(4') the symbols R⁶ are chosen from radicals corresponding to the definitions of R², X and Y;
(5') the symbols m, n, p, q, r, s and t each represent integers or fractional numbers that satisfy the following cumulative conditions:
■ m and t are each numbers that are always other than zero, the sum of which is equal to 2 + s,
■ n is in the range from 0 to 50,
■ p is in the range from 0 to 20,
■ when n = 0, p is at least equal to 1 and when p = 0, n is at least equal to 1,
■ q is other than 0 and not more than 48,
■ r is in the range from 0 to 10,
■ s is in the range from 0 to 1,
■ the sum n + p + q + r + s + t giving the total number of silicon atoms is in the range from 2 to 50,
■ the ratio 100 s/(n + p + q + r + s + t) giving the content of units "T" is ≤ 10,
■ the ratio 100 (m + p + r + s [when R⁶ = Y] + t) / (n + p + q + r + s + t) giving the content of functions Y ranges from 4 to 100,
■ the ratio 100 (n + p + s [when R⁶ = X])/(n + p + q + r + s + t) giving the content of functions X ranges from 10 to 100;
the said process being **characterized in that** it consists in reacting:
- an organosilane of formula: 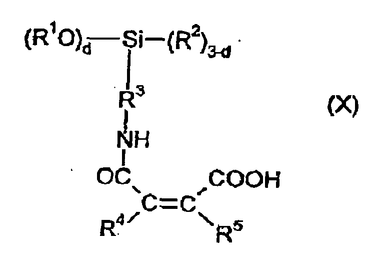
- with a polysilazane of formula: 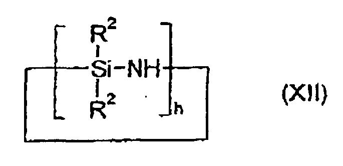 in which formulae the symbols R¹, R², R³, R⁴ and R⁵ are radicals corresponding to the definitions given in points (1') to (3') concerning formula (III) and h is a number ranging from 3 to 8,
- this reaction being performed in the presence of a catalyst, optionally supported on a mineral material, based on at least one Lewis acid, working at atmospheric pressure and at a temperature in the range from room temperature (23°C) to 150°C.

3. Preparation process according to Claim 1 or 2, **characterized in that**, in formula (III):
(1) the symbols R² are chosen from the radicals: methyl, ethyl, n-propyl, isopropyl, n-butyl, n-pentyl, cyclohexyl and phenyl;
(2) the symbols Y are chosen from a hydroxyl radical and a linear or branched alkoxyl radical containing from 1 to 6 carbon atoms;
(3) the functions represented by the symbol X are chosen from the functions of formulae (II/1), (II/2) and (II/3) and mixtures thereof, in which:
- when, where appropriate, there is a mixture of function(s) X of formula (II/1) with functions X of formulae (II/2 and/or II/3), the mole fraction of functions X of formula (II/2) and/or (II/3) in all of the functions X is on average less than or equal to 5 mol%;
- the symbol R³ represents an alkylene radical corresponding to the following formulae: -(CH₂)₂-, -(CH₂)₃-, -(CH₂)₄-, -CH₂-CH(CH₃)-, -(CH₂)₂-CH(CH₃)-CH₂-, -(CH₂)₃-O-(CH₂)₃-, -(CH₂)₃₋O-CH₂-CH(CH₃)-CH₂-, -(CH₂)₃-O-CH₂CH(OH)-CH₂-;
- the symbols R⁴ and R⁵ are chosen from a hydrogen atom, a chlorine atom and methyl, ethyl, n-propyl and n-butyl radicals.

4. Preparation process according to Claim 1 or 3, **characterized in that** the following operating conditions are used:
- the disilazane (XI) is used in an amount at least equal to 0.5 mol per 1 mol of starting organosilane (X);
- the Lewis acid is used in an amount at least equal to 0.5 mol per 1 mol of starting organosilane (X);
- the halosilane(s) of the stabilization step is (are) used in an amount at least equal to 0.5 mol per 1 mol of starting organosilane (X);
- the organic base(s) of the stabilization step is(are) used in an amount at least equal to 0.5 mol per 1 mol of starting organosilane (X).

5. Preparation process according to Claim 2 or 3, **characterized in that** the following operating conditions are used;
- the polysilazane (XII) is used in an amount at least equal to 0.5/h mol per 1 mol of starting organosilane (X), h being the number of silazane units in the polysilazane of formula (XII);
- the Lewis acid is used in an amount at least equal to 0.5 mol per 1 mol of starting organosilane (X).

## Patentansprüche

1. Verfahren zur Herstellung von Organosiliciumverbindungen mit im Wesentlichen linearen multifunktionellen Polyorganosiloxanen, welche die folgende durchschnittliche Formel aufweisen: 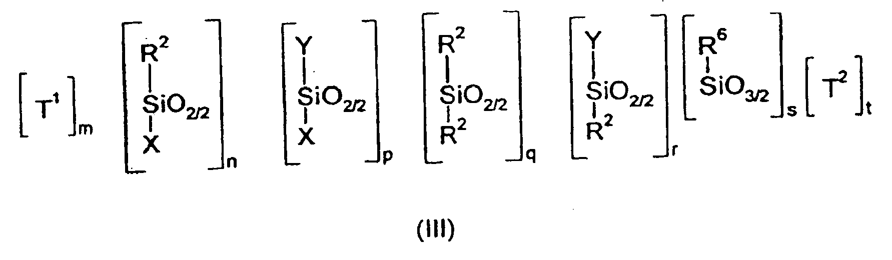 in der:
(1') die Symbole T¹ aus den Einheiten HO_{1/2} und R¹O_{1/2}, in denen das Radikal R¹ ein Alkylradikal, linear oder verzweigt, mit 1 bis 15 Kohlenstoffatomen darstellt, gewählt sind;
(2') die Symbole T², welche identisch oder unterschiedlich zu den Symbolen T¹ sind, aus den Einheiten HO_{1/2} und R¹O_{1/2} und der Einheit (R²)₃SiO_{1/2}, in denen das Radikal R¹ wie zuvor bei (1') beschrieben ist und in denen die Radikale R², identisch oder verschieden, jeweils eine monovalente Kohlenwasserstoffgruppe darstellen, die aus einem Alkylradikal, linear oder verzweigt, mit 1 bis 6 Kohlenstoffatomen, einem Cycloalkylradikal mit 5 bis 8 Kohlenstoffatomen und einem Phenylradikal gewählt ist, gewählt sind;
(3')
* die Symbole R² wie zuvor bei (2') beschrieben sind;
* die Symbole X, identisch oder verschieden, jeweils eine Funktion darstellen, die eine aktivierte Ethylen-Doppelbindung trägt und aus den Radikalen mit den folgenden Formeln (II/1), (II/2), (II/3) und deren Mischungen gewählt ist: 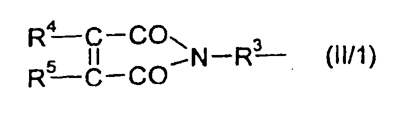 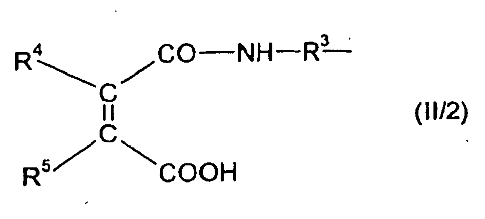 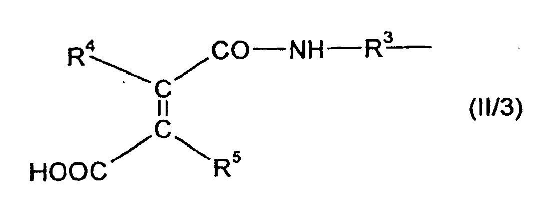
• mit den Bedingungen, gemäß welchen:
- wenigstens eine der Funktionen X der Formel (I1/1) entspricht,
- wenn gegebenenfalls eine Mischung aus Funktion(en) X der Formel (II/1) mit Funktionen X der Formeln (II/2) und/oder (II/3) vorliegt, der Molenbruch der Funktionen X der Formeln (II/2) und/oder (II/3) in der Gesamtheit von Funktionen X im Mittel gleich oder kleiner 12 Mol-% ist
• wobei in den Formeln:
+ R³ ein divalentes Alkylenradikal ist, linear oder verzweigt, mit 1 bis 15 Kohlenstoffatomen, dessen freie Valenz von einem Kohlenstoffatom getragen wird und das an ein Siliciumatom gebunden ist, wobei das Radikal R³ im Innern der Alkylenkette von wenigstens einem Heteroatom (wie Sauerstoff oder Stickstoff) oder wenigstens einer divalenten Gruppe mit wenigstens einem Heteroatom (wie Sauerstoff oder Stickstoff) unterbrochen sein kann, und insbesondere von wenigstens einem divalenten Rest der allgemeinen Formel ^{V1}Rest^{V2}, der gewählt ist aus: -O-, -CO-, -CO-O-, -COO-cyclohexylen (gegebenenfalls substituiert durch ein OH-Radikal)-, -O-alkylen (linear oder verzweigt mit C₂-C₆, gegebenenfalls substituiert durch ein OH-Radikal oder COOH)-, -O-CO-alkylen (linear oder verzweigt mit C₂-C₆, gegebenenfalls substituiert durch ein OH-Radikal oder COOH)-, -CO-NH-, -O-CO-NH- und -NH-alkylen (linear oder verzweigt mit C₂₋C₆)-CO-NH-; R³ weiterhin ein divalentes aromatisches Radikal der allgemeinen Formel ^{V1}Radikal^{V2} ist, das gewählt ist aus: -Phenylen (ortho, meta oder para)-alkylen (linear oder verzweigt mit C₂-C₆)-, -Phenylen (ortho, meta oder para)-O-alkylen (linear oder verzweigt mit C₂-C₆)-, -Alkylen (linear oder verzweigt mit C₂-C₆)- phenylen(ortho, meta oder para)-alkylen (linear oder verzweigt mit C₁₋C₆)-, und -Alkylen (linear oder verzweigt mit C₂-C₆)-phenylen (ortho, meta oder para)-O-alkylen (linear oder verzweigt mit C₁-C₆)-; vorzugsweise stellt das Symbol R³ ein Alkylenradikal dar, welches den folgenden Formeln entspricht: -(CH₂)₂, -(CH₂)₃-, -(CH₂)₄, -CH₂-CH(CH₃)-, -(CH₂)₂-CH(CH₃)-CH₂-, -(CH₂)₃-O-(CH₂)₃-, -(CH₂)₃-O-CH₂-CH(CH₃)-CH₂-, -(CH₂)₃-O-CH₂CH(OH)-CH₂-; noch bevorzugter ist R³ ein Radikal -(CH₂)₂- oder -(CH₂)₃-; mit der Angabe, dass bei den vorausgegangenen Definitionen von R³ die genannten divalenten Reste und Radikale, sofern diese nicht symmetrisch sind, mit der Valenz v1 links und der Valenz v2 rechts oder umgekehrt mit der Valenz v2 links und der Valenz v1 rechts angeordnet sein können;
+ die Symbole R⁴ und R⁵, identisch oder verschieden, jeweils ein Wasserstoffatom, ein Halogenatom, ein Cyanoradikal oder ein Alkylradikal, linear oder verzweigt, mit 1 bis 6 Kohlenstoffatomen darstellen;
• und die Symbole Y, identisch oder verschieden, jeweils eine Hydroxyl- oder Alkoxylfunktion R¹O oder R¹, wie zuvor unter (1') angegeben, darstellen;
(4') die Symbole R⁶ aus den Radikalen gewählt sind, die den Definitionen von R², X und Y entsprechen;
(5') die Symbole m, n, p, q, r, s und t jeweils ganze Zahlen oder Bruchzahlen darstellen, die den folgenden Sammelbedingungen entsprechen:
■ m und t sind beides Zahlen, die immer ungleich null sind, deren Summe 2+s ist,
■ n liegt im Bereich von 0 bis 50,
■ p liegt im Bereich von 0 bis 20,
■ wenn n = 0 ist, ist p wenigstens gleich 1, und wenn p = 0 ist, ist n wenigstens = 1,
■ q = 0,
■ r liegt im Bereich von 0 bis 10,
■ s liegt im Bereich von 0 bis 1,
■ die Summe n + p + q + r +s + t, welche die Gesamtzahl an Siliciumatomen ergibt, liegt im Bereich von 2 bis 50,
■ das Verhältnis 100 s / (n + p + q + r + s + t), welches den Anteil an Einheiten "T" ergibt, ist ≤10,
■ das Verhältnis 100(m+p+r+s [wenn R⁶=Y] +t) / (n+p + q+r+s+ t), welches den Anteil an Funktionen Y ergibt, liegt im Bereich von 4 bis 100,
■ das Verhältnis 100 (n + p + s [wenn R⁶ = X]) / (n + p + q + r + s + t), welches den Anteil an Funktionen X ergibt, im Bereich von 10 bis 100 liegt,
wobei das Verfahren **dadurch gekennzeichnet ist, dass** es darin besteht, die folgenden Schritte (d1) und (d2) durchzuführen:
(d1) zum Reagieren gebracht wird
- ein Organosilan der Formel: 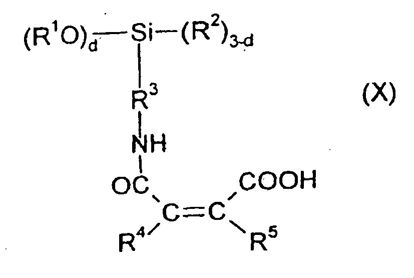
- mit einem Disilasan der Formel:
(R²)₃Si-NH-Si(R²)₃ (Xl)
wobei in den Formeln R¹, R², R³, R⁴ und R⁵ Radikale sind, welche den unter (1') bis (3') bezüglich der Formel (III) angegebenen Definitionen entsprechen, und d eine Zahl ist, die aus 2 oder 3 gewählt ist,
- diese Reaktion in Anwesenheit eines Katalysators durchgeführt wird, welcher auf einem mineralischen Material getragen wird oder nicht, auf Basis wenigstens einer Lewis-Säure, bei atmosphärischem Druck und einer Temperatur, die im Bereich von Umgebungstemperatur (23°C) bis 150°C liegt;
(d2) eine Stabilisierung des erhaltenen Reaktionsmediums durchgeführt wird durch Behandlung des Letztgenannten mit wenigstens einem Halogensilan der Formel (R²)₃ Si-halogeno- bei Anwesenheit wenigstens einer nicht nukleophilen und nicht gegenüber der in Laufe des Schritts (d1) in situ gebildeten Imidfunktion reaktiven organischen Base.

2. Verfahren zur Herstellung von Organosiliciumverbindungen mit im Wesentlichen linearen multifunktionellen Polyorganosiloxanen, welche die folgende durchschnittliche Formel aufweisen: 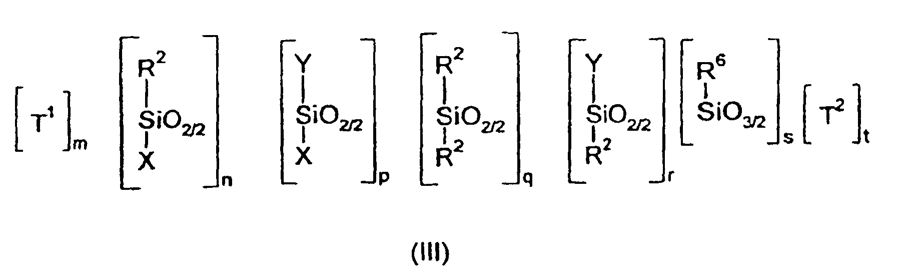 in der:
(1') die Symbole T¹ aus den Einheiten HO_{1/2} und R¹O_{1/2}, in denen das Radikal R¹ ein Alkylradikal, linear oder verzweigt, mit 1 bis 15 Kohlenstoffatomen darstellt, gewählt sind;
(2') die Symbole T², welche identisch oder unterschiedlich zu den Symbolen T¹ sind, aus den Einheiten HO_{1/2} und R¹O_{1/2} und der Einheit (R²)₃SiO_{1/2}, in denen das Radikal R¹ wie zuvor bei (1') beschrieben ist und in denen die Radikale R², identisch oder verschieden, jeweils eine monovalente Kohlenwasserstoffgruppe darstellen, die aus einem Alkylradikal, linear oder verzweigt, mit 1 bis 6 Kohlenstoffatomen, einem Cycloalkylradikal mit 5 bis 8 Kohlenstoffatomen und einem Phenylradikal gewählt ist, gewählt sind;
(3')
* die Symbole R² wie zuvor bei (2') beschrieben sind;
* die Symbole X, identisch oder verschieden, jeweils eine Funktion darstellen, die eine aktivierte Ethylen-Doppelbindung trägt, und aus den Radikalen mit den folgenden Formeln (II/1), (II/2), (II/3) und deren Mischungen gewählt ist: 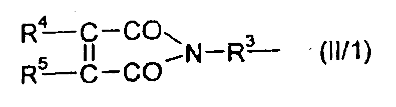 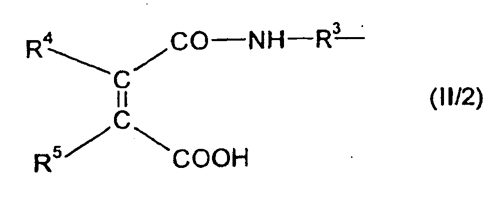 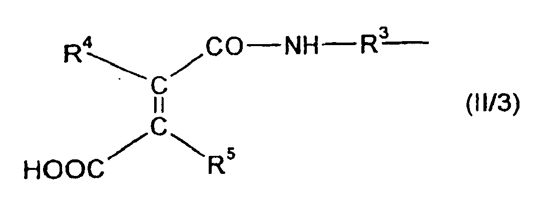
• mit den Bedingungen, gemäß welchen:
- wenigstens eine der Funktionen X der Formel (II/1) entspricht,
- wenn gegebenenfalls eine Mischung aus Funktion(en) X der Formel (II/1) mit Funktionen X der Formeln (II/2) und/oder (II/3) vorliegt, der Molenbruch der Funktionen X der Formeln (II/2) und/oder (II/3) in der Gesamtheit von Funktionen X im Mittel gleich oder kleiner 12 Mol-% ist
• wobei in den Formeln:
+ R³ ein divalentes Alkylenradikal ist, linear oder verzweigt, mit 1 bis 15 Kohlenstoffatomen, dessen freie Valenz von einem Kohlenstoffatom getragen wird und das an ein Siliciumatom gebunden ist, wobei das Radikal R³ im Innern der Alkylenkette von wenigstens einem Heteroatom (wie Sauerstoff oder Stickstoff) oder wenigstens einer divalenten Gruppe mit wenigstens einem Heteroatom (wie Sauerstoff oder Stickstoff) unterbrochen sein kann, und insbesondere von wenigstens einem divalenten Rest der allgemeinen Formel ^{V1}Rest^{V2}, der gewählt ist aus: -O-, -CO-, -CO-O-, -COO-cyclohexylen (gegebenenfalls substituiert durch ein OH-Radikal)-, -O-alkylen (linear oder verzweigt mit C₂-C₆, gegebenenfalls substituiert durch ein OH-Radikal oder COOH)-, -O-CO-alkylen (linear oder verzweigt mit C₂-C₆, gegebenenfalls substituiert durch ein OH-Radikal oder COOH)-, -CO-NH-, -O-CO-NH- und -NH-alkylen (linear oder verzweigt mit C₂₋C₆)-CO-NH-; R³ weiterhin ein divalentes aromatisches Radikal der allgemeinen Formel ^{V1}Radikal^{V2} ist, das gewählt ist aus: -Phenylen (ortho, meta oder para)-alkylen (linear oder verzweigt mit C₂-C₆)-, -Phenylen (ortho, meta oder para)-O-alkylen (linear oder verzweigt mit C₂-C₆)-, -Alkylen (linear oder verzweigt mit C₂-C₆)- phenylen(ortho, meta oder para)-alkylen (linear oder verzweigt mit C₁₋C₆)-, und -alkylen (linear oder verzweigt mit C₂-C₆)-phenylen (ortho, meta oder para)-O-alkylen (linear oder verzweigt mit C₁-C₆)-; vorzugsweise stellt das Symbol R³ ein Alkylenradikal dar, welches den folgenden Formeln entspricht: -(CH₂)₂, -(CH₂)₃-, -(CH₂)₄, -CH₂-CH(CH₃)-, -(CH₂)₂-CH(CH₃)-CH₂-, -(CH₂)₃-O-(CH₂)₃-, -(CH₂)₃-O-CH₂-CH(CH₃)-CH₂-, -(CH₂)₃-O-CH₂CH(OH)-CH₂-; noch bevorzugter ist R³ ein Radikal -(CH₂)₂- oder -(CH₂)₃-; mit der Angabe, dass bei den vorausgegangenen Definitionen von R³ die genannten divalenten Reste und Radikale, sofern diese nicht symmetrisch sind, mit der Valenz v1 links und der Valenz v2 rechts oder umgekehrt mit der Valenz v2 links und der Valenz v1 rechts angeordnet sein können;
+ die Symbole R⁴ und R⁵, identisch oder verschieden, jeweils ein Wasserstoffatom, ein Halogenatom, ein Cyanoradikal oder ein Alkylradikal, linear oder verzweigt, mit 1 bis 6 Kohlenstoffatomen darstellen;
• und die Symbole Y, identisch oder verschieden, jeweils eine Hydroxyl- oder Alkoxylfunktion R¹O oder R¹, wie zuvor unter (1') angegeben, darstellen;
(4') die Symbole R⁶ aus den Radikalen gewählt sind, die den Definitionen von R², X und Y entsprechen;
(5') die Symbole m, n, p, q, r, s und t jeweils ganze Zahlen oder Bruchzahlen darstellen, die den folgenden Sammelbedingungen entsprechen:
■ m und t sind beides Zahlen, die immer ungleich null sind, deren Summe 2+sist,
■ n liegt im Bereich von 0 bis 50,
■ p liegt im Bereich von 0 bis 20,
■ wenn n = 0 ist, ist p wenigstens gleich 1, und wenn p = 0 ist, ist n wenigstens = 1,
■ q ist ungleich null und höchstens gleich 48,
■ r liegt im Bereich von 0 bis 10,
■ s liegt im Bereich von 0 bis 1,
■ die Summe n + p + q + r +s + t, welche die Gesamtzahl an Siliciumatomen ergibt, liegt im Bereich von 2 bis 50,
■ das Verhältnis 100 s / (n + p + q + r + s + t), welches den Anteil an Einheiten "T" ergibt, ist ≤ 10,
■ das Verhältnis 100 (m + p + r + s [wenn R⁶ = Y] + t) / (n + p + q + r + s + t), welches den Anteil an Funktionen Y ergibt, liegt im Bereich von 4 bis 100,
■ das Verhältnis 100 (n + p + s [wenn R⁶ = X]) / (n + p + q + r + s + t), welches den Anteil an Funktionen X ergibt, liegt im Bereich von 10 bis 100,
wobei das Verfahren **dadurch gekennzeichnet ist, dass** es darin besteht, zum Reagieren zu bringen:
- ein Organosilan der Formel 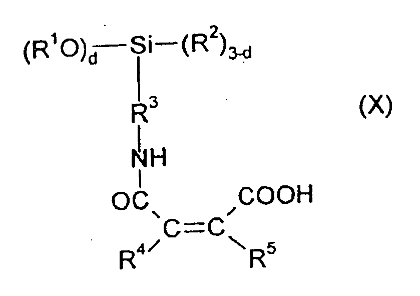
- mit einem Polysilasan der Formel: 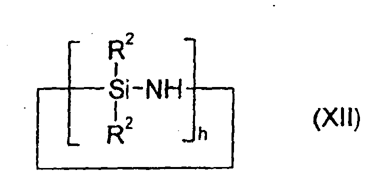 wobei in den Formeln die Symbole R¹, R², R³, R⁴ und Radikale sind, welche den unter (1') bis (3') bezüglich der Formel (III) angegebenen Definitionen entsprechen und h eine Zahl im Bereich von 3 bis 8 ist,
- wobei die Reaktion in Anwesenheit eines Katalysators durchgeführt-wird, welcher auf einem mineralischen Material getragen wird oder nicht, auf Basis wenigstens einer Lewis-Säure, bei atmosphärischem Druck und einer Temperatur, die im Bereich von Umgebungstemperatur (23°C) bis 150°C liegt;

3. Verfahren zur Herstellung gemäß Anspruch 1 oder 2, **dadurch gekennzeichnet, dass** in der Formel (III):
(1) die Symbole R² gewählt sind aus den Radikalen: Methyl, Ethyl, n-Propyl, Isopropyl, n-Butyl, n-Pentyl, Cyclohexyl und Phenyl;
(2) die Symbole Y gewählt sind aus einem Hydroxylradikal und einem Alkoxylradikal, linear oder verzweigt, mit 1 bis 6 Kohlenstoffatomen;
(3) die durch das Symbol X dargestellten Funktionen aus den Funktionen der Formeln (II/1), (II/2), (II/3) und deren Mischungen gewählt sind, in denen:
- wenn gegebenenfalls eine Mischung aus Funktion(en) X der Formel (II/1) mit Funktionen X der Formeln (II/2 und/oder II/3) vorliegt, der Molenbruch der Funktionen X der Formeln (II/2) und/oder (II/3) in der Gesamtheit von Funktionen X im Mittel gleich oder kleiner 5 Mol-% ist;
- das Symbol R³ ein Alkylenradikal darstellt, das den folgenden Formeln entspricht:
-(CH₂)₂, -(CH₂)₃-, -(CH₂)₄, -CH₂-CH(CH₃)-, -(CH₂)₂-CH(CH₃)-CH₂-, (CH₂)₃-O-(CH₂)₃-, -(CH₂)₃-O-CH₂-CH(CH₃)-CH₂-, -(CH₂)₃-O-CH₂CH(OH)-CH₂-;
- die Symbole R⁴ und R⁵ gewählt sind aus einem Wasserstoffatom, einem Chloratom und den Radikalen Methyl, Ethyl, n-Propyl, n-Butyl.

4. Verfahren zur Herstellung gemäß Anspruch 1 oder 3, **dadurch gekennzeichnet, dass** die folgenden Duchführungsbedingungen eingehalten werden:
- das Disilasan (XI) in einer Menge von wenigstens 0,5 Mol pro 1 Mol Organosilan (X) vom Ausgang verwendet wird;
- die Lewis-Säure in einer Menge von wenigstens 0,5 Mol pro 1 Mol Organosilan (X) vom Ausgang verwendet wird;
- das (oder die) Halogensilan(e) des Stabilisierungsschritts in einer Menge von wenigstens 0,5 Mol pro 1 Mol Organosilan (X) vom Ausgang verwendet wird (werden);
- die organische Base(n) des Stabilisierungsschritts in einer Menge von wenigstens 0,5 Mol pro 1 Mol Organosilan (X) vom Ausgang verwendet wird (werden).

5. Verfahren zur Herstellung gemäß Anspruch 1 oder 2, **dadurch gekennzeichnet, dass** die folgenden Duchführungsbedingungen eingehalten werden:
- das Polysilasan (XII) in einer Menge von wenigstens 0,5/h Mol pro 1 Mol Organosilan (X) vom Ausgang verwendet wird, wobei h die Anzahl an Silasaneinheiten in dem Polysilasan der Formel (XII) ist;
- die Lewis-Säure in einer Menge von wenigstens 0,5 Mol pro 1 Mol Organosilan (X) vom Ausgang verwendet wird.
